(19) Europäisches Patentamt
European Patent Office
Office européen des brevets

(11) EP 3 541 882 B1

(12) EUROPÄISCHE PATENTSCHRIFT

(45) Veröffentlichungstag und Bekanntmachung des Hinweises auf die Patenterteilung:
**22.04.2020 Patentblatt 2020/17**

(21) Anmeldenummer: **16797873.3**

(22) Anmeldetag: **16.11.2016**

(51) Int Cl.:
***C09D 183/06*** *(2006.01)* ***C09D 183/08*** *(2006.01)*

(86) Internationale Anmeldenummer:
**PCT/EP2016/077842**

(87) Internationale Veröffentlichungsnummer:
**WO 2018/091078 (24.05.2018 Gazette 2018/21)**

# (54) DISPERSIONEN VON BÉTA-KETOCARBONYL-FUNKTIONELLEN ORGANOSILICIUMVERBINDUNGEN

DISPERSIONS OF BETA-KETOCARBONYL-FUNCTIONAL ORGANOSILICON COMPOUNDS

DISPERSIONS DE COMPOSÉS ORGANOSILICIÉS À FONCTION BETA-CÉTOCARBONYLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**25.09.2019 Patentblatt 2019/39**

(73) Patentinhaber: **Wacker Chemie AG**
**81737 München (DE)**

(72) Erfinder:
- **BREHM, Christof**
  **84489 Burghausen (DE)**
- **HELLER, Anton**
  **84359 Simbach (DE)**
- **HÖLZLWIMMER, Elisabeth**
  **Simbach 84359 (DE)**

(74) Vertreter: **Deffner-Lehner, Maria et al**
**Wacker Chemie AG**
**Zentralbereich Patente, Marken und Lizenzen**
**Hanns-Seidel-Platz 4**
**81737 München (DE)**

(56) Entgegenhaltungen:
**DE-A1-102005 056 050 US-A1- 2016 121 239**

EP 3 541 882 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft wässrige Dispersionen enthaltend β -Ketocarbonyl-funktionelle Organosiliciumverbindungen.

Umsetzungsprodukte von Amino-funktionalisierten Organosiliciumverbindungen mit Diketenen werden als β -Ketocarbonyl-funktionelle Organosiliciumverbindungen bezeichnet. Derartige Verbindungen sind schon lange bekannt.

So ist in US 2008/0293907 A1 ein Verfahren zur Herstellung von β -Ketocarbonyl-funktionellen Organosiliciumverbindungen beschrieben, bei dem Diketen mit Aminogruppen aufweisenden Organosiliciumverbindungen umgesetzt wird. Es werden Öle erhalten.

In US 2011/0024679 A1 sind wachsartige β-Ketocarbonyl-funktionelle Organosiliciumverbindungen beschrieben, die durch Umsetzung von α,ω-Aminopropyl-terminierten Organosiliciumverbindungen mit Alkylketen-Dimeren erhalten werden. Bei den Alkyl-Gruppen handelt es sich um längerkettige $C_{14}/C_{16}$-Alkylreste. Diese wachsartigen β-Ketocarbonyl-funktionellen Organosiliciumverbindungen werden in Siliconölen niederer Viskosität gelöst, z. B. in Dimethylpolysiloxan mit Trimethylsiloxanendgruppen und einer Viskosität von 35 $mm^2/s$ (25°C), erreichen bei diesen eine "Gelierung" und finden insbesondere in der Kosmetik Anwendung.

In US 2016/0121239 A1 wird ein Verfahren zum Entschäumen und/oder zur Verhinderung des Schäumens von wässrigen, Tenside enthaltenden Zusammensetzungen durch Zugabe von Entschäumerformulierungen beschrieben, wobei die beschriebenen Entschäumerformulierungen wachsartige β-Ketocarbonyl-funktionelle Organosiliciumverbindungen enthalten. Diese wurden durch Umsetzung von Amino-funktionalisierten Organosiliciumverbindungen mit Alkylketen-Dimer erhalten, wobei es sich bei den Alkyl-Gruppen ebenfalls um längerkettige $C_{14}/C_{16}$-Alkylreste handelt.

In US 2009/0144912 A1 wird ein Verfahren zur Behandlung von proteinhaltigen, faserartigen Stoffen, insbesondere Leder, mit β -Ketocarbonyl-funktionellen Organosiliciumverbindungen beschrieben. Bei den verwendeten β-Ketocarbonyl-funktionellen Organosiliciumverbindungen handelt es sich ausschließlich um Umsetzungsprodukte Amino-funktionalisierter Organosiliciumverbindungen mit Diketen; also ohne längerkettige Alkylreste. Die Applikation erfolgt dabei in Form von Lösungen in Testbenzin oder Isopropanol. Die Applikation in Form von Dispersionen ist zwar erwähnt, als mögliche Emulgatoren werden aber ausschließlich anionische Ester oder Amide, wie ethoxylierte Phosphorsäureester, Sarkoside oder Sulfosuccinate genannt. Ein Emulgieren von β-Ketocarbonyl-funktionellen Organosiliciumverbindungen mit längerkettigen Alkylresten ist mit diesen Emulgatoren nicht möglich.

Es bestand daher die Aufgabe wässrige Formulierungen von β -Ketocarbonyl-funktionellen Organosiliciumverbindungen mit längerkettigen Alkylresten bereitzustellen, die über eine ausreichende Lagerstabilität verfügen, mit wässrigen Formulierungen Amino-haltiger Organosiliciumverbindungen kombinierbar sind und zur Hydrophobierung von textilen Fasern und Geweben verwendet werden können.

Die Aufgabe wird durch die Erfindung gelöst.

Gegenstand der Erfindung sind wässrige Dispersionen enthaltend

(A) β-Ketocarbonyl-funktionelle Organosiliciumverbindungen, die mindestens einen Si-gebundenen Rest **A** der allgemeinen Formel

$$(Si)\text{-}L^1\text{-}[X^1\text{-}L^2\text{-}]_yX^2 \qquad (I)$$

enthalten, wobei

$L^1$ gleich oder verschieden ist und einen zweiwertigen, Si-C-gebundenen Kohlenwasserstoffrest mit 1 bis 18 C-Atomen bedeutet,
$L^2$ gleich oder unterschiedlich ist und einen zweiwertigen Kohlenwasserstoffrest mit 1 bis 6 C-Atomen bedeutet,
$X^1$ ein Rest der Formel -O-, -NZ-, -$NR^2$- oder -S-, vorzugsweise -NZ-, bedeutet,
$X^2$ ein Rest der Formel -O-Z, -NH-Z, -$NR^2$-Z, -S-Z, vorzugsweise -NH-Z, bedeutet,
Z ein Rest der Formel -C(=O)-$CHR^3$-C(=O)-$CH_2R^3$ ist,
$R^2$ einen einwertigen Kohlenwasserstoffrest mit 1 bis 18 C-Atomen bedeutet,
$R^3$ einen einwertigen, gegebenenfalls substituierten Kohlenwasserstoffrest mit mindestens 12 C-Atomen, vorzugsweise mit mindestens 14 C-Atome, bedeutet,
y 0, 1, 2 oder 3, vorzugsweise 0 oder 1, besonders bevorzugt 0, ist und
(Si)- die Bindung zum Si-Atom bedeutet,

(B1) mindestens einen nicht-ionischen Emulgator mit einem HLB-Wert von kleiner gleich 15 und
(C) Wasser.

Ferner können die erfindungsgemäßen wässrigen Dispersionen gegebenenfalls

(B2) mindestens einen weiteren nicht-ionischen Emulgator mit einem HLB-Wert von größer 15 enthalten.

Ferner können die erfindungsgemäßen wässrigen Dispersionen gegebenenfalls

(B3) mindestens einen anionischen Emulgator enthalten.

Die Kombination der Emulgatoren (B1) mit (B2)

oder (B1) mit (B3)

oder die Kombination der Emulgatoren (B1), (B2) und (B3) sind also möglich.

Im Falle dass weitere Emulgatoren (B2) oder (B3) enthalten sind, ist das Verhältnis der nicht-ionischen Emulgatoren (B1) zu weiteren nicht-ionischen Emulgatoren (B2) oder anionischen Emulgatoren (B3) größer gleich 1:10, vorzugsweise größer gleich 1:8, besonders bevorzugt größer gleich 1:6, kleiner gleich 10:1, vorzugsweise kleiner gleich 5:1, besonders bevorzugt kleiner gleich 4:1, jeweils bezogen auf das Gewicht der eingesetzten Emulgatoren (B1),(B2) und (B3).

Ferner können die erfindungsgemäßen wässrigen Dispersionen gegebenenfalls

(B4) kationische Emulgatoren enthalten.

Eine Kombination der Emulgatoren (B1) mit (B4)

oder (B1) mit (B2) und (B4)

oder (B1) mit (B3) und (B4)

oder (B1) mit (B2), (B3) und (B4) ist also möglich.

Die erfindungsgemäßen wässrigen Dispersionen enthalten vorzugsweise mindestens 5 Gew.-%, bevorzugt mindestens 10 Gew.-%, und vorzugsweise höchstens 70,0 Gew.-%, bevorzugt höchstens 50 Gew.-%, besonders bevorzugt höchstens 40 Gew.-%, β-Ketocarbonyl-funktionelle Organosiliciumverbindungen (A).

Die erfindungsgemäßen wässrigen Dispersionen enthalten vorzugsweise mindestens 1 Gew.-Teil, bevorzugt mindestens 2 Gew.-Teile und vorzugsweise höchstens 25 Gew.-Teile, bevorzugt höchstens 20 Gew.-Teile, besonders bevorzugt höchstens 15 Gew.-Teile, Emulgator (B1), jeweils bezogen auf 100 Gew.-Teile der β-Ketocarbonyl-funktionellen Organosiliciumverbindungen (A).

Im Falle, dass weitere Emulgatoren (B2) und/oder (B3) und/oder (B4) enthalten sind, enthalten die erfindungsgemäßen wässrigen Dispersionen vorzugsweise mindestens 1 Gew.-Teil, bevorzugt mindestens 2 Gew.-Teile und besonders bevorzugt mindestens 4 Gew.-Teile, und vorzugsweise höchstens 25 Gew.-Teile, bevorzugt höchstens 20 Gew.-Teile, besonders bevorzugt höchstens 15 Gew.-Teile, an Emulgatoren (B2) und/oder (B3) und/oder (B4) in der Summe, jeweils bezogen auf 100 Gew.-Teile der β-Ketocarbonyl-funktionellen Organosiliciumverbindungen (A) .

Die erfindungsgemäßen wässrigen Dispersionen enthalten vorzugsweise mindestens 1 Gew.-%, bevorzugt mindestens 5 Gew.-%, insbesondere mindestens 10 Gew.-%, und vorzugsweise höchstens 94,5 Gew.-%, bevorzugt höchstens 85 Gew.-%, insbesondere höchstens 80 Gew.-%, Wasser (C).

Die erfindungsgemäßen wässrigen Dispersionen können gegebenenfalls weitere Inhaltsstoffe enthalten. Beispiele für weitere Inhaltsstoffe sind

(D) nichtwässrige Lösemittel oder Co-Emulgatoren und

(E) Hilfsstoffe ausgewählt aus der Gruppe der pH-Regulierungsmittel, Salze, Schauminhibitoren, Verdicker, Schutzkolloide, Konservierungsmittel, Desinfektionsmittel, Netzmittel, Korrosionsinhibitoren, Farbstoffe, Duftstoffe und deren Mischungen.

Die erfindungsgemäßen wässrigen Dispersionen weisen vorzugsweise Partikelgrößen (D50) von kleiner oder gleich 0,8 μm, bevorzugt kleiner oder gleich 0,6 μm, besonders bevorzugt kleiner oder gleich 0,4 μm, auf.

Bei den wässrigen Dispersionen im Sinne der Erfindung handelt es sich um Stoffgemische, welche aus zwei oder mehr Phasen bestehen. Dabei ist ein Stoff, die sogenannte disperse Phase, im Falle der vorliegenden Erfindung also die β-Ketocarbonyl-funktionelle Organosiliciumverbindung (A), in einem anderen Stoff, dem Dispersionsmittel, im Falle der vorliegenden Erfindung also in Wasser (C) und gegebenenfalls nicht-wässrigem Lösemittel (D), in feinster Form verteilt. Handelt es sich bei der dispersen Phase, also der β-Ketocarbonyl-funktionellen Organosiliciumverbindung (A), um eine Flüssigkeit, so wird die wässrige Dispersion auch als wässrige Emulsion bezeichnet. Handelt es sich bei der dispersen Phase, also der β-Ketocarbonyl-funktionelle Organosiliciumverbindung (A), um einen Feststoff, so wird die wässrige Dispersion auch als wässrige Suspension bezeichnet.

Die in den erfindungsgemäßen wässrigen Dispersionen eingesetzten β-Ketocarbonyl-funktionellen Organosiliciumverbindungen (A) können oligomere oder polymere Organosiloxane, vorzugsweise Organopolysiloxane, sein. Sie enthalten vorzugsweise mindestens 3, bevorzugt mindestens 5 und besonders bevorzugt mindestens 10 Si-Atome und vorzugsweise bis zu 2000 Si-Atome, bevorzugt bis zu 1000 Si-Atome und besonders bevorzugt bis zu 700 Si-Atome.

Vorzugsweise werden als β-Ketocarbonyl-funktionelle Organosiliciumverbindungen (A) Organopolysiloxane bestehend aus Einheiten der allgemeinen Formel

$$A_aR_b(OR^1)_cSiO_{\frac{4-(a+b+c)}{2}} \qquad (II)$$

eingesetzt, wobei

A ein Rest der Formel (I) ist,
R einen einwertigen, gegebenenfalls substituierten Kohlenwasserstoffrest mit 1 bis 18 C-Atomen je Rest bedeutet,
$R^1$ ein Wasserstoffatom oder einen Alkylrest mit 1 bis 8 C-Atomen bedeutet,
a 0 oder 1
b 0, 1, 2 oder 3 und
c 0 oder 1 ist,
mit der Maßgabe, dass die Summe a+b+c kleiner oder gleich 3 ist und durchschnittlich mindestens ein Rest A je Molekül enthalten ist.

Bevorzugt als β-Ketocarbonyl-funktionelle Organosiliciumverbindungen (A) sind Organopolysiloxane der allgemeinen Formel

$$A_dR^4_{(3-d)}SiO(SiR_2O)_e(SiR^4AO)_fSiR^4_{(3-d)}A_d \qquad (III),$$

wobei

| | |
|---|---|
| A | ein Rest der Formel (I) ist, |
| $R^4$ | gleich oder verschieden ist und einen Rest R oder $OR^1$ bedeutet, |
| R und $R^1$ | die oben dafür angegebene Bedeutung haben, |
| d | 0 oder 1, |
| e | 0 oder eine ganze Zahl von 1 bis 2000 und |
| f | 0 oder eine ganze Zahl von 1 bis 20 ist, |

mit der Maßgabe, dass durchschnittlich mindestens ein Rest A je Molekül enthalten ist, was bedeutet, dass
f ungleich 0 ist, wenn d gleich 0 ist bzw.
d gleich 1 ist, wenn f gleich 0 ist.

Die in der erfindungsgemäßen Zusammensetzung eingesetzten β -Ketocarbonyl-funktionellen Organosiliciumverbindungen (A) können wachsartig fest oder flüssig sein. Im letzteren Fall weisen sie vorzugsweise eine Viskosität von 1 bis 1 000 000 mPa.s bei 25°C, bevorzugt 100 bis 50 000 mPa.s bei 25°C, auf.

Die eingesetzten β-Ketocarbonyl-funktionellen Organosiliciumverbindungen (A) sind bekannt und in US 2011/0024679 A1 bzw. US 2016/0121239 A1 (incorporated by reference) einschließlich ihrer Herstellung beschrieben.

Die eingesetzten β-Ketocarbonyl-funktionellen Organosiliciumverbindungen (A) werden vorzugsweise hergestellt, indem Organosiliciumverbindungen (1) mit mindestens einem Rest B der allgemeinen Formel

$$(Si)-L^1-[X^3-L^2-]_yX^4 \qquad (IV)$$

mit Diketenen (2) der allgemeinen Formel

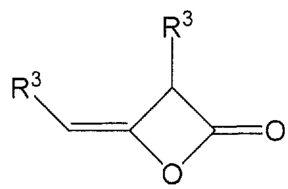

(V) ,

umgesetzt werden,
wobei

$X^3$ ein Rest der Formel -O-, -NH-, $-NR^2-$ oder -S-, vorzugsweise -NH- bedeutet,
$X^4$ ein Rest der Formel -OH, $-NH_2$, $-NR^2H$ oder -SH, vorzugsweise $-NH_2$ bedeutet,
$R^2$, $R^3$, $L^1$, $L^2$, y und (Si) die oben dafür angegebene Bedeutung haben.

Vorzugsweise werden als Organosiliciumverbindungen (1) Organopolysiloxane bestehend aus Einheiten der allgemeinen Formel

$$B_gR_h(OR^1)_kSiO_{\frac{4-(g+h+k)}{2}} \quad (VI)$$

eingesetzt, wobei

B einen Rest der Formel (IV) bedeutet,
R einen einwertigen, gegebenenfalls substituierten Kohlenwasserstoffrest mit 1 bis 18 C-Atomen je Rest bedeutet,
$R^1$ ein Wasserstoffatom oder einen Alkylrest mit 1 bis 8 C-Atomen bedeutet,
g 0 oder 1
h 0, 1, 2 oder 3 und
k 0 oder 1 ist,
mit der Maßgabe, dass die Summe g+h+k kleiner oder gleich 3 ist und durchschnittlich mindestens ein Rest B je Molekül enthalten ist.

Bevorzugte Beispiele für Organosiliciumverbindungen (1) sind Organopolysiloxane der allgemeinen Formel

$$B_1R^4_{(3-1)}SiO(SiR_2O)_m(SiR^4BO)_nSiR^4_{(3-1)}B_1 \quad (VII),$$

wobei

| | |
|---|---|
| B | einen Rest der Formel (IV) bedeutet, |
| $R^4$ | gleich oder verschieden ist und einen Rest R oder $OR^1$ bedeutet, |
| R und $R^1$ | die oben dafür angegebene Bedeutung haben, |
| 1 | 0 oder 1, |
| m | 0 oder eine ganze Zahl von 1 bis 2000 und |
| n | 0 oder eine ganze Zahl von 1 bis 20 ist, |

mit der Maßgabe, dass durchschnittlich mindestens ein Rest B je Molekül enthalten ist, was bedeutet, dass n ungleich 0 ist, wenn 1 gleich 0 ist bzw.
1 gleich 1 ist, wenn n gleich 0 ist.

Die eingesetzten Organosiliciumverbindungen (1) weisen vorzugsweise eine Viskosität von 1 bis 1 000 000 mPa.s bei 25°C, bevorzugt 100 bis 50 000 mPa.s bei 25°C, auf.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Alkenylreste, wie der Vinyl-, 5-Hexenyl-, Cyclohexenyl-, 1-Propenyl-, Allyl-, 3-Butenyl- und 4-Pentenylrest; Alkinylreste, wie der Ethinyl-, Propargyl- und 1-Propinylrest; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der $\alpha$- und der $\beta$-Phenylethylrest.
Bevorzugte Beispiele für Reste R sind der Methylrest oder der Ethylrest.

Beispiele für Reste $R^1$ sind das Wasserstoffatom, oder Alkylreste wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest.
Bevorzugte Beispiele für $R^1$ sind das Wasserstoffatom oder der Methyl- oder der Ethylrest.

Beispiele für Kohlenwasserstoffreste R gelten auch für Kohlenwasserstoffreste $R^2$.

Beim Rest $R^3$ handelt es sich um einen einwertigen, gegebenenfalls substituierten Kohlenwasserstoffrest mit mindestens 12 C-Atomen, vorzugsweise mit mindestens 14 C-Atome bedeutet und vorzugsweise höchstens 18 C-Atomen.
Bevorzugt weist der Rest $R^3$ 14 bis 16 C-Atome auf, besonders bevorzugt ist er ein $C_{14}$-$C_{16}$-Alkylrest.
Beispiele für Reste $R^3$ sind der Dodecyl-, Tetradecyl-, Hexadecyl- und der Octadecylrest.

Beispiele für $L^1$ sind zweiwertige Kohlenwasserstoffreste wie die Methylengruppe, die 1,2-Ethylengruppe, die 1,3-Propylengruppe, die 1,3-Butylengruppe, die 1,4-Butylengruppe, die 1,5-Pentylengruppe, die 1,6-Hexylengruppe.

Besonders bevorzugte Beispiele sind die 1,3-Propylengruppe und die 1,3-Butylengruppe.

Beispiele für $L^2$ sind zweiwertige Kohlenwasserstoffreste wie die 1,2-Ethylengruppe, die 1,3-Propylengruppe, die 1,3-Butylengruppe, die 1,4-Butylengruppe, die 1,5-Pentylengruppe, die 1,6-Hexylengruppe.
Ein besonders bevorzugtes Beispiel ist die 1,2-Ethylengruppe.

Beispiele für Reste B sind

$-CH_2CH_2CH_2OH$,

$-CH_2OCH_2CH_2OH$,

$-CH_2CH_2CH_2OCH_2CH_2OH$,

$-CH_2CH_2CH_2SH$,

$-CH_2CH_2CH_2NH_2$,

$-CH_2CH_2CH_2NHCH_3$,

$-CH_2CH(CH_3)NH_2$

$-CH_2CH_2CH(CH_3)NH_2$,

$-CH_2CH_2CH_2NHCH_2CH_2NH_2$

und

$-CH_2CH(CH_3)\ CH_2NHCH_2CH_2NH_2$.

Diketen (2) wird vorzugsweise in Mengen von 0,5 bis 1,5 Mol, bevorzugt 0,7 bis 1,2 Mol, je Mol der Summe an Wasserstoffatomen enthaltenden $X^3$- und $X^4$-Gruppen im Rest B der Formel (IV) der Organosiliciumverbindung (1) eingesetzt.

Die Diketene (2) sind bei Raumtemperatur feste Stoffe, so dass deren Umsetzung mit Verbindungen (1) bevorzugt in der Wärme erfolgt, vorzugsweise bei 50 bis 100°C, so dass die Diketene (2) in geschmolzenem Zustand vorliegen. Alternativ können auch Lösungsmittel verwendet werden, jedoch ist diese Vorgehensweise nicht bevorzugt. Vorzugsweise wird das Verfahren zur Herstellung der erfindungsgemäßen β-Ketocarbonyl-funktionellen Organosiliciumverbindungen (A) beim Druck der umgebenden Atmosphäre, also etwa bei 1020 hPa, durchgeführt. Das Verfahren kann aber auch bei höheren oder niedrigeren Drücken durchgeführt werden.

Vorzugsweise enthalten daher die wässrigen Dispersionen

(A) erfindungsgemäße β-Ketocarbonyl-funktionelle Organosiliciumverbindungen, die mindestens einen Si-gebundenen Rest A der Formel (I) enthalten, bevorzugt Organopolysiloxane aus Einheiten der Formel (II), insbesondere Organopolysiloxane der Formel (III),
(B1) mindestens einen nicht-ionischen Emulgator mit einem HLB-Wert von kleiner gleich 15,
gegebenenfalls (B2) mindestens einen weiteren nicht-ionischen Emulgator mit einem HLB-Wert von größer 15,
gegebenenfalls (B3) mindestens einen anionischen Emulgator, gegebenenfalls(B4) kationische Emulgatoren,
(C) Wasser
gegebenenfalls (D) nichtwässrige Lösemittel oder Co-Emulgatoren und
gegebenenfalls (E) Hilfsstoffe ausgewählt aus der Gruppe der pH-Regulierungsmittel, Salze, Schauminhibitoren, Verdicker, Schutzkolloide, Konservierungsmittel, Desinfektionsmittel, Netzmittel, Korrosionsinhibitoren, Farbstoffe, Duftstoffe und deren Mischungen.

Bevorzugt sind wässrige Dispersionen enthaltend

(A) erfindungsgemäße β-Ketocarbonyl-funktionelle Organosiliciumverbindungen, die mindestens einen Si-gebundenen Rest A der Formel (I) enthalten, insbesondere Organopolysiloxane aus Einheiten der Formel (II), besonders bevorzugt Organopolysiloxane der Formel (III),
(B1) mindestens einen nicht-ionischen Emulgator mit einem HLB-Wert von kleiner gleich 15,
mindestens einen weiteren Emulgator ausgewählt aus der Gruppe der

(B2) nicht-ionischen Emulgatoren mit einem HLB-Wert von größer 15,
(B3) anionischen Emulgatoren, und Mischungen von (B2) und (B3)

gegebenenfalls (B4) kationische Emulgatoren,
(C) Wasser,
gegebenenfalls (D) nichtwässrige Lösemittel oder Co-Emulgatoren und
gegebenenfalls (E) Hilfsstoffe ausgewählt aus der Gruppe der pH-Regulierungsmittel, Salze, Schauminhibitoren, Verdicker, Schutzkolloide, Konservierungsmittel, Desinfektionsmittel, Netzmittel, Korrosionsinhibitoren, Farbstoffe, Duftstoffe und deren Mischungen.

Die in den erfindungsgemäßen wässrigen Dispersionen verwendeten nicht-ionischen Emulgatoren (B1) sind Emulgatoren mit einem HLB-Wert von kleiner gleich 15, bevorzugt kleiner gleich 14, besonders bevorzugt kleiner gleich 13, und vorzugsweise größer gleich 6, bevorzugt größer gleich 8, besonders bevorzugt größer gleich 9.

Der HLB-Wert (HLB steht für hydrophilic-lipophilic balance) beschreibt den hydrophilen und lipophilen Anteil von hauptsächlich nichtionischen Tensiden. Der HLB-Wert kann für nichtionische Tenside nach Hans-Dieter Dörfler, Grenzflächen- und Kolloidchemie, VCH, Weinheim, 1994, S. 198, folgendermaßen berechnet werden:

$$\mathrm{HLB} = 20 \times \left(1 - \frac{\mathrm{M_l}}{\mathrm{M}}\right)$$

Dabei ist $M_1$ die Molmasse des lipophilen Anteils des Tensid-Moleküls und M die Molmasse des gesamten Moleküls. Der Faktor 20 ist ein frei ausgewählter Skalierungsfaktor.

(Nicht einschränkende) Beispiele für in den erfindungsgemäßen wässrigen Dispersionen verwendete nichtionische Emulgatoren (B1) mit einem HLB-Wert von kleiner gleich 15 sind:

1. Alkylpolyglycolether, vorzugsweise solche mit 3 bis 20 EO-Einheiten und Alkylresten von 8 bis 18 C-Atomen.
2. Carbonsäurepolyglycolester, insbesondere Fettsäurepolyglycolester, vorzugsweise solche mit 3 bis 20 EO-Einheiten und Carbonsäureresten von 8 bis 18 C-Atomen.
3. Ethoxylierte oder nicht ethoxylierte Sorbitanfettsäureester.
4. Ethoxyliertes Rizinusöl oder hydrierte Varianten.
5. Polyglycerincarbonsäureester.
6. Alkylpolyglykoside der allgemeinen Formel R*-O-ZO, worin R* einen linearen oder verzweigten, gesättigten oder ungesättigten Alkylrest mit im Mittel 8-24 C-Atomen und ZO einen Oligoglykosidrest mit im Mittel o = 1-10 Hexose- oder Pentoseeinheiten oder Gemischen davon bedeuten.
7. Alkylarylpolyglycolether, vorzugsweise solche mit 5 bis 20 EO-Einheiten und 8 bis 18 C-Atomen in den Alkyl- und Arylresten.
8. Ethylenoxid/Propylenoxid(EO/PO)-Blockcopolymere, mit einem HLB-Wert von kleiner 15, wie die sogenannten Poloxamere (Blockcopolymere aus Ethylenoxid- und Propylenoxid-Einheiten).
9. Polyvinylalkohol, der noch 5 bis 50%, vorzugsweise 8 bis 20% Vinylacetateinheiten aufweist, mit einem Polymerisationsgrad von 500 bis 3000.
10. Additionsprodukte von Alkylaminen mit Alkylresten von 8 bis 22 C-Atomen mit Ethylenoxid oder Propylenoxid.
11. Naturstoffe und deren Derivate, vorzugsweise ausgewählt aus der Gruppe von Lecithin, Lanolin, Saponine, Cellulose; Cellulosealkylether und Carboxyalkylcellulosen, deren Alkylgruppen jeweils bis zu 4 Kohlenstoffatome besitzen.
12. Polare Gruppen, insbesondere die Elemente O, N, C, S, P, Si, enthaltende lineare Organo(poly)siloxane, insbesondere solche mit Alkoxygruppen mit bis zu 24 C-Atomen und/oder bis zu 40 EO- und/oder PO-Gruppen.

Bevorzugte Beispiele für nicht-ionische Emulgatoren (B1) sind

1. Alkylpolyglycolether, wie z.B. Oleth-10, Laureth-3, Laureth-4, Trideceth-5, Trideceth-6, Trideceth-8, Trideceth-10 oder Trideceth-12 (nach INCI-Bezeichnung).
2. Carbonsäurepolyglycolester, wie z.B. PEG-7 Olivate, PEG-8 Oleate oder PEG-8 Laurate (nach INCI-Bezeichnung).
3. Ethoxylierte oder nicht ethoxylierte Sorbitanfettsäureester, wie z.B. Sorbitan Laurate, Sorbitan Stearate, Sorbitan Distearate oder Polysorbat 85 (nach INCI-Bezeichnung).
4. Ethoxyliertes Rizinusöl oder hydrierte Varianten, wie z.B. (Bezeichnung nach INCI-Nomenklatur) PEG-25 hydrogenated Castor Oil.
5. Polyglycerincarbonsäureester, wie z.B. Polyglycerin-2 Oleat, Polyglycerin-10 Distearat oder Polyglycerin-2-Stearat.
6. Alkylpolyglykoside, wie z.B. Glucopon 225, Glucopon 600 (Bezeichnung nach Handelsnamen).
7. Polyalkylenblockpolymere, wie z.B. PEG-PPG-PEG-Blockpolymer Pluronic® L-31, PEG-PPG-PEG-Blockpolymer Pluronic® L-61, PPG-PEG-PPG-Blockpolymer Pluronic® 17R4, PPG-PEG-PPG Pluronic®-Blockpolymer 31R1 (HLB jeweils < 7) (erhältlich bei Sigma-Aldrich).

(Nicht einschränkende) Beispiele für in den erfindungsgemäßen wässrigen Dispersionen gegebenenfalls verwendete nichtionische Emulgatoren (B2) mit einem HLB-Wert von größer 15 sind:

1. Alkylpolyglycolether, vorzugsweise solche mit 15 bis 200 EO-Einheiten und Alkylresten von 8 bis 18 C-Atomen.
2. Carbonsäurepolyglycolester, insbesondere Fettsäurepolyglycolester, vorzugsweise solche 15 bis 200 EO-Einheiten und Carbonsäureresten von 8 bis 18 C-Atomen.
3. Ethoxylierte Sorbitanfettsäureester, vorzugsweise Monoester.
4. Ethoxyliertes Rizinusöl oder hydrierte Varianten, vorzugsweise solche mit 40 bis 250 EO-Einheiten.
5. Polyglycerincarbonsäureester, vorzugsweise Monoester und solche mit mehr als 5 Glyceryl-Einheiten.
6. Alkylpolyglykoside der allgemeinen Formel R*-O-ZO, worin R* einen linearen oder verzweigten, gesättigten oder ungesättigten Alkylrest mit vorzugsweise kleiner gleich 10 C-Atomen und ZO einen Oligoglykosidrest mit im Mittel o = 1-10 Hexose- oder Pentoseeinheiten oder Gemischen davon bedeuten.
7. Alkylarylpolyglycolether, vorzugsweise solche mit 15 bis 200 EO-Einheiten und 8 bis 18 C-Atomen in den Alkyl- und Arylresten.
8. Ethylenoxid/Propylenoxid(EO/PO)-Blockcopolymere, mit einem HLB-Wert von größer 15, wie die sogenannten Poloxamere (Blockcopolymere aus Ethylenoxid- und Propylenoxid-Einheiten).

Bevorzugte Beispiele für nicht-ionische Emulgatoren (B2) mit einem HLB-Wert von größer 15 sind

1. Alkylpolyglycolether, wie z.B. Ceteareth-20, Oleth-20, Laureth-20, Laureth-23, Trideceth-16, Trideceth-20, Steareth-20 oder Steareth-21 (nach INCI-Bezeichnung).
2. Carbonsäurepolyglycolester, insbesondere Fettsäurepolyglycolester, wie z.B. PEG-20 Stearat, PEG-20 Laurat oder PEG-100 Stearat (nach INCI-Bezeichnung).
3. Ethoxylierte Sorbitanfettsäureester, wie z.B. Polysorbat 20, Polysorbat 60 oder Polysorbat 80 (nach INCI-Bezeichnung).
4. Ethoxyliertes Rizinusöl oder hydrierte Varianten, wie z.B. (Bezeichnung nach INCI-Nomenklatur) PEG 200 Castor Oil oder PEG-60 hydrogenated Castor Oil.
5. Polyglycerincarbonsäureester, wie z.B. Polyglycerin-10 Oleat, Polyglycerin-10 Laurat oder Polyglycerin-10-Stearat.
7. Polyalkylenblockpolymere, wie z.B. PEG-PPG-PEG-Blockpolymer Pluronic® F-108 (HLB >24; Mn ≈ 14600) (erhältlich bei Sigma-Aldrich).

(Nicht einschränkende) Beispiele für gegebenenfalls in den erfindungsgemäßen wässrigen Dispersionen verwendete anionische Emulgatoren (B3) sind:

1. Alkylsulfate, besonders solche mit einer Kettenlänge von 8 bis 18 C-Atomen, Alkyl- und Alkarylethersulfate mit 8 bis 18 C-Atomen im hydrophoben Rest und 1 bis 30 Ethylenoxid(EO)-bzw. Propylenoxid(PO)einheiten.
2. Sulfonate, besonders Alkylsulfonate mit 8 bis 18 C-Atomen, Alkylarylsulfonate mit 8 bis 18 C-Atomen.
3. Alkali- und Ammoniumsalze von Carbonsäuren mit 8 bis 20 C-Atomen im Alkyl-, Aryl-, Alkaryl- oder Aralkylrest, insbesondere Alkali- und Ammoniumsalze von Fettsäuren vorzugsweise solche mit Carbonsäureresten von 8 bis 20 C-Atomen.

Der gegebenenfalls enthaltene anionische Emulgator (B3) ist vorzugsweise ausgewählt aus der Gruppe der Carboxylate, der Sulfate und der Sulfonate.
Bevorzugte Beispiele für anionische Emulgatoren (B3) sind Alkali- und Ammoniumsalze von Carbonsäuren mit 8 bis 20 C-Atomen im Alkyl-, Aryl-, Alkaryl- oder Aralkylrest. Besonders bevorzugte anionische Emulgatoren (B3) sind Alkali- und Ammoniumsalze von Fettsäuren, vorzugsweise solche mit Carbonsäureresten von 8 bis 20 C-Atomen, wie z.B. Natriumsalze, Kaliumsalze, Triethanolammoniumsalze der Laurinsäure, Myristinsäure, Palmitinsäure, Stearinsäure oder auch Ölsäure.
Anionische Emulgatoren, die Carbonsäureestergruppen enthalten, insbesondere die Sulfosuccinate; anionische Emulgatoren, die Amidgruppen enthalten, insbesondere die Sarkoside oder Tauride; oder anionische Emulgatoren, die Phosphorsäureestergruppen enthalten, sind bevorzugt ausgeschlossen.
Besonders bevorzugt sind folgende anionische Emulgatoren ausgeschlossen:

Sulfosuccinate der Formel

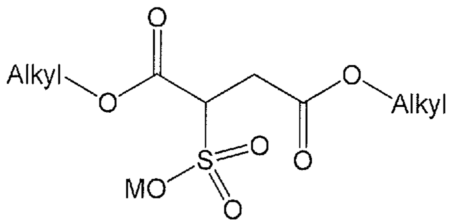

Sarkoside der Formel

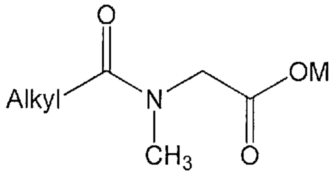

und
ethoxylierte
Phosphorsäureester der Formel

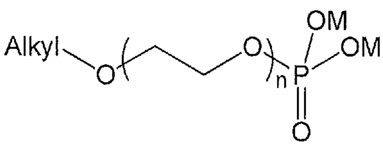

wobei Alkyl einen Alkylrest mit 6 bis 20 C-Atomen, wie einen 2-Ethylhexylrest, n-Decylrest, n-Dodecylrest, n-Pentadecylrest, n-Hexadecylrest, n-Heptadecylrest oder n-Octadecylrest,
bedeutet und M ein Metallion, insbesondere Alkalimetallion, wie Natriumion, bedeutet.

(Nicht einschränkende) Beispiele für gegebenenfalls in den erfindungsgemäßen wässrigen Dispersionen verwendete kationische Emulgatoren (B4) sind:

1. Salze von primären, sekundären und tertiären Fettaminen mit 8 bis 24 C-Atomen mit Essigsäure, Schwefelsäure, Salzsäure und Phosphorsäuren.
2. Alkylpyridinium-, Alkylimidazolinium- und Alkyloxazoliniumsalze, insbesondere solche, deren Alkylkette bis zu 18 C-Atome besitzt, speziell die Halogenide, Sulfate, Phosphate und Acetate.
3. Quaternäre Alkyl- und Alkylbenzolammoniumsalze, insbesondere solche, deren Alkylgruppen 6 bis 24 C-Atome besitzen, insbesondere die Halogenide, Sulfate, Phosphate und Acetate.

Die in den erfindungsgemäßen wässrigen Dispersionen gegebenenfalls verwendeten nicht-ionischen Emulgatoren (B2) oder anionischen Emulgatoren (B3) oder kationischen Emulgatoren (B4) können aus einem der o.g. Emulgatoren oder aus einem Gemisch zweier oder mehrerer o.g. Emulgatoren bestehen.
Die in den erfindungsgemäßen wässrigen Dispersionen verwendeten nicht-ionischen Emulgatoren (B1) bzw. gegebenenfalls verwendeten nicht-ionischen Emulgatoren (B2), anionischen Emulgatoren (B3) oder kationischen Emulgatoren (B4) können in reiner Form oder als Lösungen eines oder mehrerer Emulgatoren in Wasser oder organischen Lösungsmitteln eingesetzt werden.
Als weitere Inhaltsstoffe in den erfindungsgemäßen wässrigen Dispersionen können
(D) nichtwässrige Lösemittel oder Co-Emulgatoren eingesetzt werden.
Die erfindungsgemäßen wässrigen Dispersionen enthalten

(D) nichtwässrige Lösemittel oder Co-Emulgatoren in einer Menge von vorzugsweise mindestens 0,1 Gew.-%, bevorzugt mindestens 0,4 Gew.-%, insbesondere mindestens 0,8 Gew.-%, und vorzugsweise höchstens 20 Gew.-%, bevorzugt höchstens 15 Gew.-%, insbesondere höchstens 10 Gew.-%.

Die nichtwässrigen Lösungsmittel (D), die in den erfindungsgemäßen wässrigen Dispersionen eingesetzt werden können, stammen beispielsweise aus der Gruppe der ein- oder mehrwertigen Alkohole, Alkanolamine oder Glycolether. Beispiele für Lösungsmittel sind Ethanol, n- oder i-Propanol, Butanolen, wie 1-Butanol, 2-Butanol oder 2-Methyl-2-propanol, Pentanole, wie 1-Pentanol, 2-Pentanol oder 3-Pentanol, Hexanole, wie 1-Hexanol, 2-Hexanol oder 3-Hexanol, Heptanole, wie 1-Heptanol, 2-Heptanol, 3-Heptanol oder 4-Heptanol, Octanole, wie 1-Octanol, 2-Octanol, 3-Octanol oder 4-Octanol, Glycol, Propandiol, Butandiole, wie 1,2-Butandiol oder 1,3-Butandiol, Hexandiole, wie 1,2-Hexandiol oder 2-Methylpentan-2,4-diol, Octandiole, wie 2-Ethylhexan-1,3-diol oder 1,2-Octandiol, Glycerin, Diglykol, Propyl- oder Butyldiglykol, Ethylenglykolmethylether, Ethylenglykolethylether, Ethylenglykolpropylether, Ethylenglykolmono-n-butylether, Diethylenglykolmethylether, Diethylenglykolethylether, Diethylenglykolmono-n-butylether, Propylenglykolmethylether, Propylenglykolethylether, Propylenglykolpropylether, Propylenglykol-n-butylether, Propylen-glykol-t-butylether, Methoxytriglykol, Ethoxytriglykol, Butoxytriglykol, Dipropylenglykolmonomethylether, Dipropylenglykolmonoethylether, 1-Butoxyethoxy-2-propanol oder 3-Methyl-3-methoxy-butanol, 1-Aminobutan, 2-Aminobutan, 2-Amino-2-methyl-propan, 1-Aminopentan, 2-Aminopentan, 1-Aminohexan, 1-Aminoheptan und 1-Aminooctan; Ethyl-, Propyl-, Isopropyl-, Butyl-, Isobutyl-, Pentyl-, Isopentyl- und Hexylacetat; Methyl-, Ethyl- und tert. Butylpropionat; Methyl-, Ethyl-, Propyl- und Butyl-butyrat; 2-Butanon, 2-Pentanon, 3-Pentanon, 4-Methyl-2-pentanon, 2-Hexanon, 3-Hexanon, 2-Heptanon, 3-Heptanon, 4-Heptanon, 5-Methyl-3-Heptanon, 2-Octanon und 3-Octanon sowie Mischungen dieser Cotenside.

Beispiele für bevorzugte nichtwässrige Lösungsmittel oder Co-Emulgatoren (D) sind 1-Alkanole der vorstehend aufgeführten Beispiele mit C5- bis C8-Ketten, Alkandiole der vorstehend aufgeführten Beispiele mit C4- bis C8-Kette, Glycerin, Propyl-, Butyl- und Pentylacetat, 2-Pentanon sowie die oben aufgeführten Ethylenglykol-, Propylenglykol-, Dipropylenglykol- oder Diethylenglykolmonoalkylether.

Als nichtwässrige Lösungsmittel oder Co-Emulgatoren (D) besonders bevorzugt sind 1-Pentanol, 1-Hexanol, 1-Octanol, Propandiol, 1,3-Butandiol, 1,2-Hexandiol, 2-Ethylhexan-1,3-diol, 1,2-Octandiol, Glycerin, Diethylenglykolmethylether, Diethylenglykolethylether, Diethylenglykolmono-n-butylether, Propylenglykolmethylether.

Ferner können Polyalkylenglykole, wie Polyethylenglykole (z.B. PEG600, PEG1000 oder PEG6000) oder Polypropylenglykole (z.B. PPG2000) oder auch Poloxamine (Copolymere aus Ethylenoxid- und Propylenoxid-Einheiten, die über einen Ethylendiamin-Kern verbrückt sind), wie z.B. Tetronic 701 oder Tetronic 90R4 (erhältlich bei Sigma-Aldrich) als Co-Emulgatoren verwendet werden.

Als weitere Inhaltsstoffe in den erfindungsgemäßen wässrigen Dispersionen können

(E) Hilfsstoffe ausgewählt aus der Gruppe der pH-Regulierungsmittel, Salze, Schauminhibitoren, Verdicker und/oder Schutzkolloide, Konservierungsmittel, Desinfektionsmittel, Netzmittel, Korrosionsinhibitoren, Farbstoffe, Duftstoffe und deren Mischungen, eingesetzt werden.

Als pH-Regulierungsmittel einsetzbar sind hier sämtliche bekannte Säuren bzw. Laugen, sofern sich ihr Einsatz nicht aus anwendungstechnischen oder ökologischen Gründen bzw. aus Gründen des Verbraucherschutzes verbietet.

Beispiele für Mineralsäuren sind Salz-, Perchlor-, Schwefel-, schweflige, Salpeter-, salpetrige, Fluss-, Phosphor-, Diphosphor- und Polyphosphor¬säuren. Beispiele für geeignete Carbonsäuren sind Ameisen-, Essig-, Propion-, Butansäuren, Citronensäure, Trichlor-, Dichlor- und Chloressigsäure, Trifluoressigsäure, Cyanessigsäure, Phenylessigsäure, Benzoesäure, m- und p-Nitrobenzoesäure, Oxalsäure, Malonsäure und Milchsäure.

Besonders bevorzugt sind Essigsäure und Ameisensäure.

Beispiele für Laugen sind Salze, wie (Erd)alkalimetallhydroxide, z.B. Natriumhydroxid, Kaliumhydroxid, Lithiumhydroxid; (Erd)alkalimetallcarbonate, z.B. Kaliumcarbonat, Natriumcarbonat, Lithiumcarbonat; oder Ammoniumsalze, z.B. Ammoniumhydroxid, oder deren wässrige Lösungen; und organische Amine, z.B. Triethanolamin (TEA), Triethylamin, Isopropylamin, oder deren wässrige Lösungen.

Besonders bevorzugt sind Natriumhydroxid, Kaliumhydroxid oder Triethanolamin.

Im Rahmen der vorliegenden Erfindung wird der pH-Wert mit einer Elektrode entsprechend der US Pharmacopeia USP 33 bei 20°C gemessen.

Der pH-Wert der erfindungsgemäßen Dispersion beträgt vorzugsweise 3 bis 11, besonders bevorzugt 5 bis 9.

Beispiele für Salze (Elektrolyte) sind insbesondere solche aus der Gruppe der anorganischen Salze, wobei eine breite Anzahl der verschiedensten Salze eingesetzt werden kann. Bevorzugte Kationen sind die Alkali- und Erdalkalimetalle, bevorzugte Anionen sind die Halogenide und Sulfate. Aus herstellungstechnischer Sicht ist der Einsatz von Natriumacetat oder Natriumchlorid in den erfindungsgemäßen wässrigen Dispersionen bevorzugt.

Beispiele für Schauminhibitoren sind Seifen, Paraffine oder Silikonöle.

Beispiele für Konservierungsmittel sind Methylisothiazolinon, Chlormethylisothiazolinon, Benzylisothiazolinon, Phenoxyethanol, Methylparaben, Ethylparaben, Propylparaben, Butylparaben, Isobutylparaben, Alkalibenzoate, Alkalisorbate, Iodopropynylbutylcarbamat, Benzylalkohol und 2-Brom-2-nitropropan-1,3-diol.

In den erfindungsgemäßen wässrigen Dispersionen werden die gegebenenfalls verwendeten Hilfsstoffe (E) in

einer Menge von vorzugsweise mindestens 0,01 Gewichtsteilen, bevorzugt mindestens 0,04 Gewichtsteilen, und vorzugsweise höchstens 20 Gewichtsteilen, bevorzugt höchstens 15 Gewichtsteilen, insbesondere höchstens 10 Gewichtsteilen, jeweils bezogen auf 100 Gewichtsteile der erfindungsgemäßen wässrigen Dispersionen eingesetzt.

Ein weiterer Gegenstand der Erfindung ist ein Verfahren zur Herstellung der erfindungsgemäßen wässrigen Dispersionen durch Mischen der

(A) erfindungsgemäßen β-Ketocarbonyl-funktionellen Organosiliciumverbindungen mit
(B1) mindestens einem nicht-ionischen Emulgator mit einem HLB-Wert von kleiner gleich 15,
gegebenenfalls (B2) mindestens einem weiteren nicht-ionischen Emulgator mit einem HLB-Wert von größer 15,
gegebenenfalls (B3) mindestens einem anionischen Emulgator,
gegebenenfalls (B4) kationischen Emulgatoren,
gegebenenfalls (D) nichtwässrigen Lösemittel oder Co-Emulgatoren,
gegebenenfalls (E) Hilfsstoffen und
(C) Wasser miteinander.

Es werden stabile Dispersionen gebildet. Dadurch liegen die β-Ketocarbonyl-funktionellen Organosiliciumverbindungen (A) in fein verteilter Form vor.

Die Art der Mischung der Komponenten, die zur Herstellung der erfindungsgemäßen Dispersionen gebraucht werden, ist nicht sehr kritisch und kann in verschiedener Reihenfolge ausgeübt werden.

In Abhängigkeit von den Komponenten (A), (B1), (C), gegebenenfalls (B2), gegebenenfalls (B3), gegebenenfalls (B4), gegebenenfalls (D) und gegebenenfalls (E) können sich aber bevorzugte Vorgehensweisen ergeben, die im Einzelfall geprüft werden sollten.

Ein favorisiertes Verfahren ist die Herstellung der wässrigen Polysiloxan-Dispersionen über eine Vordispersion aus β-Ketocarbonyl-funktionellen Organosiliciumverbindungen (A), den nicht-ionischen Emulgatoren (B1), gegebenenfalls nicht-ionischen Emulgatoren (B2), gegebenenfalls anionischen Emulgatoren (B3), gegebenenfalls kationischen Emulgatoren (B4), gegebenenfalls dem nichtwässrigen Lösungsmittel oder Co-Emulgator (D) und Wasser (C), wobei weniger als 10 Gew.% Wasser, bevorzugt weniger als 7,5 Gew.% Wasser (C), jeweils bezogen auf die Summe aus β-Ketocarbonyl-funktionellen Organosiliciumverbindungen (A)und den Emulgatoren (B1) und gegebenenfalls (B2), (B3) und (B4), verwendet wird.

Die Vordispersion wird dadurch erzeugt, indem die β-Ketocarbonyl-funktionellen Organosiliciumverbindungen (A) in mehreren Portionen, vorzugsweise mehr als zwei Portionen zu einer Mischung aus den nicht-ionischen Emulgatoren (B1), gegebenenfalls nicht-ionischen Emulgatoren (B2), gegebenenfalls anionischen Emulgatoren (B3), gegebenenfalls kationischen Emulgatoren (B4), gegebenenfalls nichtwässrigem Lösungsmittel oder Co-Emulgator (D) und der oben angegebenen Portion Wasser (C) eingearbeitet wird.
Die erfindungsgemäßen wässrigen Dispersionen werden schließlich erhalten, indem zur hergestellten Vordispersion die restliche Menge Wasser (C) sowie gegebenenfalls Hilfsstoffe (E) hinzugefügt werden.

Im Falle, dass es sich bei den eingesetzten β-Ketocarbonyl-funktionellen Organosiliciumverbindungen (A) und/oder den eingesetzten nicht-ionischen Emulgatoren (B1) und/oder gegebenenfalls nicht-ionischen Emulgatoren (B2) und/oder gegebenenfalls anionischen Emulgatoren (B3) und/oder gegebenenfalls kationischen Emulgatoren (B4) um Stoffe handelt, die bei 20°C wachsartig oder fest sind, so erfolgt die Herstellung der Vordispersion vorzugsweise bei höheren Temperaturen. Der Emulgiervorgang zur Herstellung der Vordispersion wird so vorzugsweise bei Temperaturen von mindestens 20°C, bevorzugt mindestens 30°C, besonders bevorzugt mindestens 40°C und vorzugsweise höchstens 90°C, bevorzugt höchstens 80°C, besonders bevorzugt höchstens 70°C durchgeführt.
Ferner müssen in diesem Fall die eingesetzten β-Ketocarbonyl-funktionellen Organosiliciumverbindungen (A) und/oder den eingesetzten nicht-ionischen Emulgatoren (B1) und/oder gegebenenfalls nicht-ionischen Emulgatoren (B2) und/oder gegebenenfalls anionischen Emulgatoren (B3) und/oder gegebenenfalls kationischen Emulgatoren (B4)vor dem Einarbeiten auf die entsprechende Temperatur oberhalb der Schmelztemperatur erwärmt werden, damit eine Dosierung möglich ist.

Das Einarbeiten der eingesetzten β-Ketocarbonyl-funktionellen Organosiliciumverbindungen (A) in die Emulgator-Wasser-Mischung erfolgt vorzugsweise unter Einwirkung hoher Scherkräfte. Hohe Scherkräfte können beispielsweise durch Rotor-Stator-Rührvorrichtungen oder durch Dissolverscheiben erreicht werden. Es handelt sich dabei um Technologien, die zur Herstellung von Dispersionen oder Emulsionen von Organopolysiloxanen bekannt sind. Derartige Homogenisiergeräte und Verfahren sind z.B. in Ullmann's Encyclopedia of Industrial Chemistry, CD-ROM-Ausgabe 2003, Wiley-VCH Verlag, unter dem Stichwort "Emulsions" beschrieben.

Rotor-Stator-Rührvorrichtungen bestehen aus einem Rotor in einem feststehenden Stator. Durch die Schlitze zwischen den Rotorzähnen gelangt das zu emulgierende Produkt in die Scherzone und verlässt diese wieder über die Statorschlitze. Durch den engen Radialspalt zwischen Rotor und Stator und die hohe Umfangsgeschwindigkeit des sich drehenden Rotors werden sehr große Schergradienten erzeugt, (siehe z.B. IKA Dispergierer Broschüre, 2013-05).

Bei Dissolverscheiben-Rührgeräten ist an einer senkrechten Rührwelle eine mit Zähnen besetzte Rührscheibe angebracht, die in das zu dispergierende Produkt getaucht wird. Setzt sich die Scheibe in Drehbewegung, entstehen dabei Scherkräfte, die ebenfalls abhängig von der Umfangsgeschwindigkeit sind. (siehe z.B Römpp Chemie Lexikon online, 2014, Kap. Dissolver).

Ferner können als Misch- und Homogenisierwerkzeuge alle weiteren dem Fachmann bekannten Dispergiergeräte, wie beispielsweise Rührer, Kneter, Ultraschallhomogenisatoren oder Hochdruckhomogenisatoren verschiedenster Bauart, verwendet werden.

Weiterhin wird das erfindungsgemäße Verfahren vorzugsweise beim Druck der umgebenden Atmosphäre durchgeführt, kann aber auch bei höheren oder niederen Drücken durchgeführt werden.

Die Herstellung der erfindungsgemäßen Dispersionen enthaltend erfindungsgemäße β-Ketocarbonyl-funktionelle Organosiliciumverbindungen (A) kann diskontinuierlich, semikontinuierlich oder kontinuierlich erfolgen.

Ein Vorteil der erfindungsgemäßen wässrigen Dispersionen gegenüber dem Stand der Technik ist ihre hohe Lagerstabilität. Lagerstabile Dispersionen sind solche Dispersionen, bei denen nach 30 Tagen Lagerung bei 50°C, vorzugsweise im Trockenschrank, keine sichtbare Trennung in zwei Phasen auftritt.

Gegenstand der Erfindung ist weiterhin ein Verfahren zur Ausrüstung von faserigen Substraten, vorzugsweise Textilien, insbesondere ein Verfahren zur Imprägnierung bzw. Hydrophobierung von faserigen Substraten, vorzugsweise Textilien, mit Zusammensetzungen enthaltend die erfindungsgemäßen wässrigen Dispersionen.

Vorzugsweise wird ein Verfahren zur Ausrüstung von faserigen Substraten, vorzugsweise Textilien, insbesondere ein Verfahren zur Imprägnierung bzw. Hydrophobierung von faserigen Substraten, vorzugsweise Textilien, mit Zusammensetzungen enthaltend wässrige Dispersionen enthaltend

(A) erfindungsgemäße β-Ketocarbonyl-funktionelle Organosiliciumverbindung, die mindestens einen Si-gebundenen Rest **A** der Formel (I) enthalten, insbesondere Organopolysiloxane aus Einheiten der Formel (II), bevorzugt Organopolysiloxane der Formel (III),
(B1) mindestens einen nicht-ionischen Emulgator mit einem HLB-Wert von kleiner gleich 15,
(C) Wasser,

gegebenenfalls (B2) mindestens einen weiteren nicht-ionischen Emulgator mit einem HLB-Wert von größer 15,
gegebenenfalls (B3) mindestens einen anionischen Emulgator, gegebenenfalls (B4) kationische Emulgatoren,
gegebenenfalls (D) nichtwässrige Lösemittel oder Co-Emulgatoren und gegebenenfalls (E) Hilfsstoffe ausgewählt aus der Gruppe der pH-Regulierungsmittel, Salze, Schauminhibitoren, Verdicker, Schutzkolloide, Konservierungsmittel, Desinfektionsmittel, Netzmittel, Korrosionsinhibitoren, Farbstoffe, Duftstoffe und deren Mischungen,
durchgeführt.

Bevorzugt wird ein Verfahren zur Ausrüstung von faserigen Substraten, vorzugsweise Textilien, insbesondere ein Verfahren zur Hydrophobierung von faserigen Substraten, vorzugsweise Textilien, mit Zusammensetzungen enthaltend wässrige Dispersionen enthaltend

(A) erfindungsgemäße β-Ketocarbonyl-funktionelle Organosiliciumverbindungen, die mindestens einen Si-gebundenen Rest **A** der Formel (I) enthalten, insbesondere Organopolysiloxane aus Einheiten der Formeln (II), besonders bevorzugt Organopolysiloxane der Formel (III),
(B1) mindestens einen nicht-ionischen Emulgator mit einem HLB-Wert von kleiner gleich 15,
mindestens einen weiteren Emulgator ausgewählt aus der Gruppe der

(B2) nicht-ionischen Emulgatoren mit einem HLB-Wert von größer 15,
(B3) anionischen Emulgatoren,

und Mischungen von (B2) und (B3)
gegebenenfalls (B4) kationische Emulgatoren,
(C) Wasser,
gegebenenfalls (D) nichtwässrige Lösemittel oder Co-Emulgatoren und
gegebenenfalls (E) Hilfsstoffe ausgewählt aus der Gruppe der pH-Regulierungsmittel, Salze, Schauminhibitoren, Verdicker, Schutzkolloide, Konservierungsmittel, Desinfektionsmittel, Netzmittel, Korrosionsinhibitoren, Farbstoffe, Duftstoffe und deren Mischungen,
durchgeführt.

Die erfindungsgemäßen wässrigen Dispersionen haben den Vorteil, dass es sich um Produkte handelt, die sicher in der Handhabung sind und die in der Lage sind, Fasern waschecht wasserabweisend und weich auszurüsten.

Die erfindungsgemäßen wässrigen Dispersionen haben den Vorteil, dass sie eine sehr gute wasserabweisende

Ausrüstung unterschiedlicher Textilien ermöglichen, dass sie einfach und sicher verarbeitbar sind, dass sie ohne dauerhaft umweltbelastende Stoffe hergestellt werden können, und dass die wasserabweisende Ausrüstung eine sehr gute Waschpermanenz aufweist.

Ein weiterer Vorteil der erfindungsgemäßen wässrigen Dispersionen ist, dass sie mit aminofunktionellen Organosiliciumverbindungen (F) oder deren wässrigen Dispersionen (F') mischbar sind, ohne dass die entstandenen Mischungen eine Instabilität aufweisen.
Die wässrigen Dispersionen (F') sind vorzugsweise wässrige Emulsionen.

Ferner können die erfindungsgemäßen wässrigen Dispersionen in Kombination mit aminofunktionellen Organosiliciumverbindungen (F) oder deren wässrigen Dispersionen (F') zur Ausrüstung von faserigen Substraten, insbesondere Textilien, verwendet werden, vorzugsweise um diese waschecht wasserabweisend und weich auszurüsten.

Als aminofunktionelle Organosiliciumverbindungen (F) werden vorzugsweise Organosiliciumverbindungen mit mindestens einem Rest Q der allgemeinen Formel

$$(Si)\text{-}L^1\text{-}[X^5\text{-}L^2\text{-}]_zX^6 \qquad (VIII)$$

eingesetzt, wobei

| | |
|---|---|
| $X^5$ | ein Rest der Formel -NH- oder $-NR^2-$, vorzugsweise -NH-bedeutet, |
| $X^6$ | ein Rest der Formel $-NH_2$ oder $-NR^2H$, vorzugsweise $-NH_2$ bedeutet, |
| z | 0, 1, 2 oder 3, vorzugsweise 0 oder 1, bevorzugt 1, ist und |
| $R^2$, $L^1$, $L^2$ und (Si) | die oben dafür angegebene Bedeutung haben. |

Es kann eine Art von aminofunktionelle Organosiliciumverbindung (F) oder mehrere Arten von aminofunktionellen Organosiliciumverbindungen (F) eingesetzt werden.

Vorzugsweise werden als aminofunktionelle Organosiliciumverbindungen (F) Organopolysiloxane bestehend aus Einheiten der allgemeinen Formel

$$Q_pR_q(OR^1)_rSiO_{\frac{4-(p+q+r)}{2}} \qquad (IX)$$

eingesetzt, wobei

Q einen Rest der Formel (VIII) bedeutet,
R und $R^1$ die oben dafür angegebene Bedeutung haben,
p 0 oder 1
q 0, 1, 2 oder 3 und
r 0 oder 1 ist,
mit der Maßgabe, dass die Summe p+q+r kleiner oder gleich 3 ist und durchschnittlich mindestens ein Rest Q je Molekül enthalten ist.

Bevorzugt werden als aminofunktionelle Organosiliciumverbindungen (F) Organopolysiloxane der allgemeinen Formel

$$Q_uR^4_{(3-u)}SiO(SiR_2O)_v(SiR^4QO)_wSiR^4_{(3-u)}Q_u \qquad (X)$$

eingesetzt, wobei

| | |
|---|---|
| Q | einen Rest der Formel (VIII) bedeutet, |
| R und $R^4$ | die oben dafür angegebene Bedeutung haben, |
| u | 0 oder 1, |
| v | 0 oder eine ganze Zahl von 1 bis 2000 und |
| w | 0 oder eine ganze Zahl von 1 bis 20 ist, |

mit der Maßgabe, dass durchschnittlich mindestens ein Rest Q je Molekül enthalten ist, was bedeutet, dass
w ungleich 0 ist, wenn u gleich 0 ist bzw.
u gleich 1 ist, wenn w gleich 0 ist.

Aminofunktionelle Organosiliciumverbindungen (F) werden bevorzugt nach den in US 2005/0215806 A1, US

2002/0049296 A1 oder US 2015/0112092 A1 beschriebenen Verfahren hergestellt.

Beispiele für Reste Q sind

$-CH_2CH_2CH_2NH_2$,

$-CH_2CH_2CH_2NHCH_3$,

$-CH_2CH(CH_3)NH_2$

$-CH_2CH_2CH(CH_3)NH_2$,

$-CH_2CH_2CH_2NHCH_2CH_2NH_2$

und

$-CH_2CH(CH_3)CH_2NHCH_2CH_2NH_2$.

Die eingesetzten aminofunktionellen Organosiliciumverbindungen (F) können wachsartig fest oder flüssig sein. Im letzteren Fall weisen sie vorzugsweise eine Viskosität von 1 bis 1 000 000 mPa.s bei 25°C, bevorzugt 100 bis 50 000 mPa.s bei 25°C, auf.

Die eingesetzten aminofunktionellen Organosiliciumverbindungen (F) können ferner in Form wässriger Dispersionen (F') mit den erfindungsgemäßen wässrigen Dispersionen enthaltend erfindungsgemäße β-Ketocarbonyl-funktionelle Organosiliciumverbindungen (A) kombiniert werden.

Die wässrigen Dispersionen (F') enthalten die aminofunktionellen Organosiliciumverbindungen (F), ferner einen oder mehrere Emulgatoren (B'), Wasser (C') sowie gegebenenfalls nichtwässrige Lösemittel oder Co-Emulgatoren (D') sowie gegebenenfalls Zusatzstoffe (E').

In den wässrigen Dispersionen (F') werden Emulgatoren (B') in Mengen von vorzugsweise 1 bis 60 Gewichtsteilen, bevorzugt 2 bis 30 Gewichtsteilen, jeweils bezogen auf 100 Gewichtsteile der wässrigen Dispersionen (F') eingesetzt.

Als Emulgatoren (B') können die zuvor genannten nicht-ionischen Emulgatoren (B1) und/oder (B2), anionische Emulgatoren (B3), kationische Emulgatoren (B4) sowie ferner Schutzkolloide oder Partikel eingesetzt werden.

In den wässrigen Dispersionen (F') werden gegebenenfalls nichtwässrige Lösemittel oder Co-Emulgatoren (D') in einer Menge von vorzugsweise mindestens 0,1 Gewichtsteilen, bevorzugt mindestens 0,4 Gewichtsteilen, insbesondere mindestens 0,8 Gewichtsteilen, und vorzugsweise höchstens 20 Gewichtsteilen, bevorzugt höchstens 15 Gewichtsteilen, insbesondere höchstens 10 Gewichtsteilen, jeweils bezogen auf 100 Gewichtsteile der wässrigen Dispersionen (F') eingesetzt.

Als gegebenenfalls verwendete nichtwässrige Lösemittel oder Co-Emulgatoren (D') können die zuvor genannten nichtwässrigen Lösemittel oder Co-Emulgatoren (D) eingesetzt werden.

In den wässrigen Dispersionen (F') werden gegebenenfalls Hilfsstoffe (E') in einer Menge von vorzugsweise mindestens 0,01 Gewichtsteilen, bevorzugt mindestens 0,04 Gewichtsteilen, und vorzugsweise höchstens 20 Gewichtsteilen, bevorzugt höchstens 15 Gewichtsteilen, insbesondere höchstens 10 Gewichtsteilen, jeweils bezogen auf 100 Gewichtsteile der wässrigen Dispersionen (F') eingesetzt.

Als gegebenenfalls verwendete Hilfsstoffe (E') können die zuvor genannten Hilfsstoffe (E) eingesetzt werden.

Die Herstellung der wässrigen Dispersionen (F') kann unter Verwendung von Misch- und Homogenisierwerkzeugen, wie zuvor für die erfindungsgemäßen Dispersionen enthaltend die erfindungsgemäßen β-Ketocarbonyl-funktionellen Organosiliciumverbindungen (A) beschrieben, erfolgen.

Die β-Ketocarbonyl-funktionellen Organosiliciumverbindungen (A) und die Amino-funktionalisierten Organosiliciumverbindungen (F) werden in Gewichtsverhältnissen von 1 zu 99 bis 99 zu 1, bevorzugt in Gewichtsverhältnissen von 20 zu 80 bis 80 zu 20, besonders bevorzugt in Gewichtsverhältnissen von 40 zu 60 bis 70 zu 30 eingesetzt.

Ferner können die erfindungsgemäßen wässrigen Dispersionen in Kombination mit aminofunktionellen Organosiliciumverbindungen (F) oder deren wässrigen Dispersionen (F') und in Kombination mit Organometallverbindungen (G) zur Behandlung von Fasern, insbesondere Textilien, verwendet werden, vorzugsweise um diese waschecht wasserabweisend und weich auszurüsten.

Als Organometallverbindungen (G) können Amine, Alkoholate, carbonsaure Salze, phosphorsaure Salze oder Chelate von Metallen ausgewählt aus der Gruppe von Pb, Zn, Zr, Sb, Fe, Cd, Sn, Ti, Ba, Ca, Mn, V, Al und Co eingesetzt werden.

Bevorzugt werden Organometallverbindungen des Zn, Zr, Ti, und des Al eingesetzt. Besonders bevorzugt sind Organometallverbindungen des Zr und Ti.

Beispiele für carbonsaure Salze sind Naphtenate, Octoate, Hexoate, Laurate, Acetate, Formiate, Citrate und Lactate.

Beispiele für Organometallverbindungen (G) sind Zink-, Zinn- und Zirkonoctoat; Aluminiumalkoholate, wie Al-trisek.-butanolat, Al-di-sek.-butanolat-mono-acetylacetonat, Al-mono-sek.-butanolat-di-acetylacetonat, Al-di-sek.-butanolat-monoacetessigsäure-ethylester, Al-mono-sek.-butanolat-di-acetessigsäure-ethylester, Al-di-sek.-butanolat-mono-acetat und Al-mono-sek.-butanolat-di-acetat; Alkyltitanate; Alkylzirkonate; Zink-, Zinn-, Zirkon-, Ferri-, Kobalt-Naphthenat; Zink- und Zirkonformiat; Zinn-, Zink- und Zirkonacetat; Dibutylzinndicaprylat, -dilaurat, -diacetat und -maleinat; Dioctylzinndiformiat, -dibenzoat und -dicrotonat; Alkanolamin-Titanate und Zirkonate; Titanphosphate; Titan-acetylacetonate; Ethylcitrat-Zirkonat; und Trialkoxyvanadate, wie Trimethoxyvanadat, Tri-n-butoxyvanadat und Triheptoxyvanadat. Bevorzugt werden Alkoholate und carbonsaure Salze des Titan und Zirkon eingesetzt.

Besonders bevorzugt sind Butyltitanat, Zirkonoctoat und Zirkonacetat.

Es kann eine Art von Organometallverbindung (G) oder mehrere Arten von Organometallverbindungen (G) eingesetzt werden.

Werden Organometallverbindungen (G) mitverwendet, können sie in Mengen von 0,1 bis 15 Gewichtsteilen, bevorzugt 0,5 bis 8 Gewichtsteilen, bezogen auf den Metallgehalt der Organometallverbindungen (G) und bezogen auf 100 Gewichtsteile β-Ketocarbonyl-funktionelle Organosiliciumverbindungen (A) und Amino-funktionalisierte Organosiliciumverbindungen (F), eingesetzt werden.

Die erfindungsgemäßen Dispersionen enthaltend die erfindungsgemäßen β-Ketocarbonyl-funktionellen Organosiliciumverbindungen (A) können mit den aminofunktionellen Organosiliciumverbindung (F) oder deren wässrigen Dispersionen (F') sowie den Organometallverbindungen (G) vermischt werden, insbesondere unter Verwendung verschiedenster Misch- und Homogenisierwerkzeugen, wie sie zuvor beschrieben wurden.

Gegenstand der Erfindung sind daher Zusammensetzungen enthaltend
erfindungsgemäße wässrige Dispersionen enthaltend erfindungsgemäße β-Ketocarbonyl-funktionelle Organosiliciumverbindungen (A),

(F) aminofunktionelle Organosiliciumverbindungen oder deren wässrige Dispersionen, insbesondere Organopolysiloxane der Formel (X) oder deren wässrige Dispersionen,
und gegebenenfalls
(G) Organometallverbindungen.

Gegenstand der Erfindung ist daher ein Verfahren zur Ausrüstung von faserigen Substraten, vorzugsweise Textilien, mit den erfindungsgemäßen Zusammensetzungen.

Vorzugsweise werden die erfindungsgemäßen Zusammensetzungen auf die faserigen Substrate, insbesondere Textilien, aufgetragen und trocknen gelassen.

Bevorzugt ist ein Verfahren zur Imprägnierung bzw. Hydrophobierung von faserigen Substraten, vorzugsweise Textilien, mit den erfindungsgemäßen Zusammensetzungen, wobei die erfindungsgemäßen Zusammensetzungen auf die faserigen Substrate, vorzugsweise Textilien, aufgetragen und anschließend die behandelten faserigen Substrate, vorzugsweise die behandelten Textilien, trocknen gelassen werden.

Beispiele für faserige Substrate sind natürliche oder synthetisch hergestellte Fasern, Garne, Stränge, Seile, textile Flächengebilde wie Vliese, Matten, gewebte, geknüpfte, gewirkte oder gestrickte Textilien, sowie Leder und Kunstleder. Bevorzugte faserige Substrate sind Textilien.

Für den Auftrag der erfindungsgemäßen Zusammensetzung können die Textilien in Form von Einzelfasern, Faserbündeln, Füllfasern, Garnen, Teppichen, Stoffbahnen oder Kleidungsstücken oder Teilen von Kleidungsstücken vorliegen. Die Textilien können aus Baumwolle, Wolle, Mischpolymere von Vinylacetat, Rayon, Hanf, natürlicher Seide, Polypropylen, Polyethylen, Polyester, Polyurethan, Polyamid, Aramid, Polyimid, Polyacrylat, Polyacrylnitril, Polylactid, Polyvinylchlorid, Glasfasern, Keramikfasern, Cellulose oder deren Gemische bestehen.

Das Auftragen auf die zu behandelnden faserigen Substraten, insbesondere Textilien, kann in beliebiger für die Behandlung von faserigen Substraten, insbesondere Textilien, geeigneter und vielfach bekannter Weise, z.B. durch Tauchen, Streichen, Gießen, Sprühen, Aufwalzen, Klotzen, Drucken oder Schaumauftrag erfolgen.

In der Anwendung kann die erfindungsgemäße Zusammensetzung mit gebrauchsüblichen Textilhilfsmitteln, wie zum Beispiel Bindemittel aus Melamin- oder Methylolharzen, Polyurethanen, Polyacrylaten, Polyvinylalkoholen, Polyvinylacetaten, optischen Aufhellern, Benetzungshilfsmitteln, Entschäumern oder weiteren Hydrophobier- und Oleophobierhilfsmitteln wie perfluorierte Kohlenwasserstoffe kombiniert werden.

Die behandelten faserigen Substrate, insbesondere Textilien, werden vorzugsweise bei Temperaturen von 10°C bis 250°C, bevorzugt 25 bis 200°C, besonders bevorzugt 80°C bis 180°C, trocknen gelassen.

Hierbei erfolgen die Vernetzung der erfindungsgemäßen Zusammensetzung und eine Imprägnierung bzw. Hydrophobierung der behandelten faserigen Substrate, insbesondere Textilien, wobei sie wasserabweisend gemacht werden.

In den nachfolgenden Beispielen beziehen sich alle Angaben von Teilen und Prozentsätzen, soweit nicht anders angegeben, auf das Gewicht.

Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanten bei Raumtemperatur ohne zusätzliche Heizung oder Kühlung einstellt, durchgeführt.

Bei den Angaben der HLB-Werte wurde auf die HLB-Werte zurückgegriffen, wie sie von den jeweiligen Herstellern angegeben werden. Da es sich bei Emulgatoren, wie beispielsweise den Polyethern, zumeist um Oligomere/Polymere mit einer Molekulargewichtsverteilung handelt, kann diese Verteilung von Hersteller zu Hersteller unterschiedlich sein. So kann es auch von Hersteller zu Hersteller zu unterschiedlichen Angaben des entsprechenden HLB-Wertes kommen, der sich auch vom theoretisch ermittelten HLB-Wert des jeweils angegebenen chemischen Namens unterscheiden kann.

Dynamische Viskositäten wurden an einem Rheometer "MCR 302" der Fa. Anton Paar nach DIN EN ISO 3219: 1994 und DIN 53019 gemessen, wobei ein Kegel-Platte-System (Kegel CP50-2) mit einem Öffnungswinkel von 2° verwendet wurde. Die Kalibrierung des Gerätes erfolgte mit Normalöl 10000 der Physikalisch-Technischen Bundesanstalt. Die Messtemperatur beträgt 25,00°C +/- 0,05°C, die Messzeit 3 min. Die Viskositätsangabe (angegeben in mPas) stellt den arithmetischen Mittelwert von drei unabhängig durchgeführten Einzelmessungen dar. Die Messunsicherheit der dynamischen Viskosität beträgt 1,5 %. Der Schergeschwindigkeitsgradient wurde in Abhängigkeit von der Viskosität gewählt und wird für jede Viskositätsangabe separat ausgewiesen.

Kinematische Viskositäten werden mittels eines Viskositäts-Messsystem ViscoSystem® AVS 350 der Fa. Schott unter Verwendung von Ubbelohde Viskosimeterrohren mit Konstante (z.B. der Fa. Windaus oder Fa. VWR) nach DIN 51562-Teil 1 oder ISO/DIS 3105 (einschließlich deren Kalibrierung) bestimmt. Die Messungen erfolgen bei einer Temperatur von 25,0 °C (+- 0,1 °C). Die Viskositätsangabe (angegeben in $mm^2/s$) stellt den arithmetischen Mittelwert von drei unabhängig durchgeführten Einzelmessungen dar: Die Messunsicherheit der kinematischen Viskosität beträgt 1,05 %. Abhängig vom Messbereich werden unterschiedliche Viskosimeterrohre mit entsprechenden Richtkonstanten verwendet:

| Messbereich | Kapillar-Nr. | Richtkonstante |
|---|---|---|
| 0,5 - 3 $mm^2/s$ | 0c | 0, 003 K |
| 0,8 - 5 $mm^2/s$ | 0a | 0,005 K |
| 1,2 - 10 $mm^2/s$ | I | 0,01 K |
| 3 - 30 $mm^2/s$ | Ic | 0,03 K |
| 10 - 100 $mm^2/s$ | II | 0,10 K |
| 30 - 300 $mm^2/s$ | IIc | 0,30 K |
| 100 - 1000 $mm^2/s$ | III | 1 K |
| 300 - 3000 $mm^2/s$ | IIIc | 3 K |
| 1000 - 10000 $mm^2/s$ | IV | 10 K |

Angabe des Messbereichs, der entsprechenden Kapillar-Nr. sowie der Konstante nach VWR-Laborkatalog, 2011-2013, S. 645.8.

Die Aminzahl gibt an, wieviel mmol KOH einem Gramm der zu bestimmenden Substanz äquivalent sind. Die Bestimmung der Aminzahl erfolgt nach DIN 16945-Version 1989-03.

$^1$H-NMR-Spektren werden als Lösung in einem CDCl3 Bruker Avance 500-NMR-Spektrometer (5 mm selektiver $^1$H-NMR-Probenkopf) mit einer Messfrequenz 500,13 MHz aufgenommen.

Die Auswertung erfolgt wie dem Fachmann bekannt und in folgender Literatur beschrieben: "Über die 1H-, 13C- und 29Si-NMR chemischen Verschiebungen einiger linearer, verzweigter und cyclischer Methyl-Siloxan-Verbindungen", G. Engelhardt, H. Jancke; J. Organometal. Chem. 28 (1971), 293-300; "Chapter 8 - NMR spectroscopy of organosilicon compounds", Elizabeth A. Williams, The Chemistry of Organic Silicon Compounds, 1989 John Wiley and Sons Ltd, 511-533.

Die Partikelgrößen werden an einem Partikelgrößenmessgerät Zetasizer Nano-S, Fa. Malvern, Software Version 6.01 mittels dynamischer Lichtstreuung (Messmethode nach Mie) bestimmt. Dazu werden die Dispersionen mit gefiltertem und entgastem Wasser auf 0,5 Gew.-% verdünnt. Die angegebenen Werte beziehen sich immer auf den Wert D(50). D(50) ist als volumengemittelter Partikeldurchmesser zu verstehen, bei dem 50% aller gemessenen Partikel einen volumengemittelten Durchmesser kleiner als der ausgewiesene Wert D(50) aufweisen. Die Messungen erfolgen bei 25°C mit folgenden festgelegten Einstellungen: Brechungsindex Wasser (Dispersant RI) bei 1,330; Viskosität (cP) bei 0,8872; Brechungsindex der dispersen Phase (Material RI) bei 1,39; Materialabsorption bei 0,010; Messdauer (Duration Used) bei 50 s; Messposition (Measurement Position) bei 0,65 mm. Die in den Dispersionsbeispielen angegebenen Photonenzählraten ergeben sich aus dem jeweiligen Verdünnungsgrad der Messproben und sind daher unterschiedlich. Wichtig ist dabei nur, dass das Messprogramm die Ergebnisse mit dem Vermerk 'Result Quality: Good' freigibt.

Die Hydrophobie der behandelten Textilien wird mittels Spraytest gemäß AATCC Testmethode Nr. 22-2005 geprüft. Dabei werden die Textilien mit entionisiertem Wasser besprenkelt. Das Ergebnis, das aus dem Vergleich der besprenkelten Textil-Oberfläche mit den Rating-Bildern in der Methodenbeschreibung resultiert, gibt in etwa an, wieviel % der Fläche unbenetzt geblieben ist. Ein Spraywert von 100 bedeutet ein völlig unbenetztes Textil.

**Beispiel 1:** β-Ketocarbonyl-funktionelle Organosiliciumverbindung **A1**:

50,7 g techn. Alkylketen-Dimer (erhältlich bei der Fa. TRIGON Chemie GmbH), welches aus einem Gemisch aus Palmitin-/Stearinsäure (ca. 30/70) hergestellt wurde, woraus ein Rest $R^3$ von C14/C16-Alkyl resultiert, werden bei 50°C aufgeschmolzen. 500,0 g eines Polysiloxans bestehend aus (3-Aminopropyl)dimethylsiloxy- und Dimethylsiloxyeinheiten der kinematischen Viskosität von 508 $mm^2/s$ (25,0°C; Kapillar-Nr. III) und einer Aminzahl von 0,18 mmol/g werden über einen Zeitraum von 70 min derart zudosiert, dass die Temperatur der Reaktionsmischung 75°C nicht überschreitet. Die technische Ware an Alkylketen-Dimer hat einen Diketen-Gehalt von 85%, so dass eine Stöchiometrie Alkylketen-Dimer : Polysiloxan von 1,0:1,0 resultiert. Nach Dosierende wird die Temperatur auf 100°C erhöht und bei dieser Temperatur eine Stunde weiter gerührt. Nach Abkühlen auf Raumtemperatur erhält man ein β-Ketocarbonyl-funktionelles Organopolysiloxan **A1,** in dem kein freies Amin (mittels $^1$H-NMR-Spektroskopie) mehr nachweisbar ist.

**Beispiel 2:** β-Ketocarbonyl-funktionelle Organosiliciumverbindung **A2:**

83,3 g des in Beispiel 1 beschriebenen Alkylketen-Dimers werden analog Beispiel 1 mit 250 g eines gemischt Hydroxy-/Methoxyterminierten Copolymers aus (2-Aminoethyl-3-aminopropyl)methylsiloxy- und Dimethylsiloxyeinheiten der kinematischen Viskosität von 977 mm2/s (25,0°C; Kapillar-Nr. IIIc) und einer Aminzahl von 0,58 mmol/g umgesetzt. Man erhält ein β-Ketocarbonyl-funktionelles Organopolysiloxan **A2,** in dem kein freies Amin (mittels 1H-NMR-Spektroskopie) mehr nachweisbar ist.

**Beispiel 3:** β-Ketocarbonyl-funktionelle Organosiliciumverbindung **A3:**

133 g des in Beispiel 1 beschriebenen Alkylketen-Dimers werden analog Beispiel 1 mit 200 g eines gemischt Hydroxy-/Methoxyterminierten Copolymers aus (2-Aminoethyl-3-aminopropyl)methoxysiloxy- und Dimethylsiloxyeinheiten der kinematischen Viskosität von 25 mm2/s (25,0°C; Kapillar-Nr. II) und einer Aminzahl von 2,4 mmol/g umgesetzt. Man erhält ein β-Ketocarbonyl-funktionelles Organopolysiloxan **A3,** in dem kein freies Amin (mittels 1H-NMR-Spektroskopie) mehr nachweisbar ist.

**Beispiel 4:** β-Ketocarbonyl-funktionelle Organosiliciumverbindung **A4:**

114 g des in Beispiel 1 beschriebenen Alkylketen-Dimers werden analog Beispiel 1 mit 263 g eines Polysiloxans bestehend aus (2-Aminoethyl-3-aminopropyl)dimethylsiloxy- und Dimethylsiloxyeinheiten der kinematischen Viskosität von 119 $mm^2/s$ (25,0°C; Kapillar-Nr. IIc) und einer Aminzahl von 0,76 mmol/g umgesetzt. Man erhält ein β-Ketocarbonyl-funktionelles Organopolysiloxan **A4,** in dem kein freies Amin (mittels $^1$H-NMR-Spektroskopie) mehr nachweisbar ist.

**Beispiel 5:** β-Ketocarbonyl-funktionelle Organosiliciumverbindung **A5:**

19 g des in Beispiel 1 beschriebenen Alkylketen-Dimers werden in zu Beispiel 1 analoger Art mit 358 g eines Polysiloxans aus (3-Aminopropyl)methylsiloxy-, Trimethylsiloxy- und Dimethylsiloxyeinheiten der kinematischen Viskosität von 259 mm2/s (25,0°C; Kapillar-Nr. III) und einer Aminzahl von 0,093 mmol/g umgesetzt. Man erhält ein β-Ketocarbonyl-funktionelles Organopolysiloxan **A5,** in dem kein freies Amin (mittels 1H-NMR-Spektroskopie) mehr nachweisbar ist.

**(Vergleichs)Beispiel 6:** (nicht-erfindungsgemäße) β-Ketocarbonyl-funktionelle Organosiliciumverbindung ohne langkettige Alkylgruppen (d.h. $R^3$ = H) **VA6:**

8,53 g Trimethyl-dioxinon (92,5%ige Lösung in Aceton) (erhältlich bei der Fa. Acros), 233,92 g eines Polysiloxans bestehend aus (3-Aminopropyl)dimethylsiloxy- und Dimethylsiloxyeinheiten der kinematischen Viskosität von 508 mm2/s (25,0°C; Kapillar-Nr. III) und einer Aminzahl von 0,18 mmol/g, 1,50 g Wasser sowie 20,0 g Toluol werden gemischt. Die Mischung wird schnell auf 110-115°C Innentemperatur aufgeheizt und bei dieser Temperatur für 2 Stunden gehalten.

Nach Abkühlen auf Raumtemperatur werden Toluol, Wasser und Aceton bei 50°C und einem verminderten Druck von 10 mbar abdestilliert. Man erhält ein braun-gefärbtes β-Ketocarbonyl-funktionelles Organopolysiloxan **VA6** der dynamischen Viskosität 1250 mPas (bei 25°C und bei einer Scherrate von 5 l/s), in dem kein freies Amin (mittels Aminzahlbestimmung) mehr nachweisbar ist.

**Beispiel 7:** β-Ketocarbonyl-funktionelle Organosiliciumverbindung **A7:**

62,9 g eines techn. Alkylketen-Dimer (erhältlich bei der Fa. WILMAR International Ltd. unter dem Namen Wilmar AKD 1865; Jodzahl: 45,5; Schmelzpunkt: 51,2°C), welches aus 65% C18-Carbonsäure hergestellt wurde, woraus ein Rest $R^3$ von C14/C16-Alkyl resultiert, werden analog Beispiel 1 mit 290 g eines Polysiloxans aus (3-Aminopropyl)methylsiloxy-, Trimethylsiloxy- und Dimethylsiloxyeinheiten der kinematischen Viskosität von 5900 mm2/s (25,0°C; Kapillar-Nr. IV) und einer Aminzahl von 0,451 mmol/g umgesetzt. Man erhält ein β-Ketocarbonyl-funktionelles Organopolysiloxan **A7,** in dem kein freies Amin (mittels 1H-NMR-Spektroskopie) mehr nachweisbar ist.

**Beispiel 8:** β-Ketocarbonyl-funktionelle Organosiliciumverbindung **A8:**

121,7 g des in Beispiel 7 beschriebenen Alkylketen-Dimers werden analog Beispiel 1 mit 250 g eines Polysiloxans aus (3-Aminopropyl)methylsiloxy-, Trimethylsiloxy- und Dimethylsiloxyeinheiten der kinematischen Viskosität von 7710 mm2/s (25,0°C; Kapillar-Nr. IV) und einer Aminzahl von 0,872 mmol/g umgesetzt. Man erhält ein ß-Ketocarbonyl-funktionelles Organopolysiloxan **A8,** in dem kein freies Amin (mittels 1H-NMR-Spektroskopie) mehr nachweisbar ist.

**Beispiel 9:** β-Ketocarbonyl-funktionelle Organosiliciumverbindung **A9:**

64,5 g des in Beispiel 7 beschriebenen Alkylketen-Dimers werden analog Beispiel 1 mit 250 g eines Polysiloxans aus (3-Aminopropyl)methylsiloxy-, Trimethylsiloxy- und Dimethylsiloxyeinheiten der kinematischen Viskosität von 1350 mm2/s (25,0°C; Kapillar-Nr. IIIc) und einer Aminzahl von 0,462 mmol/g umgesetzt. Man erhält ein β-Ketocarbonyl-funktionelles Organopolysiloxan **A9,** in dem kein freies Amin (mittels $^1$H-NMR-Spektroskopie) mehr nachweisbar ist.

**Beispiel 10:** β-Ketocarbonyl-funktionelle Organosiliciumverbindung **A10:**

26,4 g des in Beispiel 1 beschriebenen Alkylketen-Dimers werden analog Beispiel 1 mit 250 g eines Polysiloxans aus (3-Aminopropyl)methylsiloxy-, Trimethylsiloxy- und Dimethylsiloxyeinheiten der kinematischen Viskosität von 272 mm2/s (25,0°C; Kapillar-Nr. III) und einer Aminzahl von 0,185 mmol/g umgesetzt. Man erhält ein β-Ketocarbonyl-funktionelles Organopolysiloxan **A10,** in dem kein freies Amin (mittels $^1$H-NMR-Spektroskopie) mehr nachweisbar ist.

**Beispiel 11:** (Erfindungsgemäße) Dispersion **E1** aus β -Ketocarbonyl-funktioneller Organosiliciumverbindung **A1:**

4,28 g an Isotridecylpentaethoxylat, käuflich erwerblich unter dem Handelsnamen Lutensol TO 5 (Fa. BASF) (HLB-Wert: 10,5), 4,74 g einer 80%igen wässrigen Lösung an Isotridecyldecaethoxylat, käuflich erwerblich unter dem Handelsnamen Lutensol TO 108 (Fa. BASF), (HLB-Wert: 13,5), und 7,48 g vollentsalztes Wasser werden in einem Metallbecher vorgelegt und im Trockenschrank auf 60°C erwärmt. Die nun flüssige Mischung wird mit Hilfe eines Ultra-Turrax T 50 Emulgiergerät (Fa. Janke & Kunkel/IKA) homogenisiert. 70 g der β -Ketocarbonyl-funktionellen Organosiliciumverbindung **A1** werden in dieser Zeit bei 60°C im Trockenschrank aufgeschmolzen und in drei Portionen unter hoher Scherung von 6000 bis 8000 UpM derart zugegeben, dass eine relativ feste steife Phase als Vordispersion resultiert. Es wird mit 113,5 g vollentsalztem, auf 60°C erwärmtem Wasser portionsweise unter geringer Scherung zur gewünschten Dispersion verdünnt. Es resultiert eine milchig-weiße Dispersion mit einer durchschnittlichen Partikelgröße D(50) von 203 nm bei einer Photonenzählrate von 253 kcps (kilo-Counts per second). Die Dispersion ist auch nach 6-monatiger Lagerung bei Raumtemperatur bzw. 30-tägiger Lagerung bei 50°C homogen und stabil.

**Beispiel 12:** (Erfindungsgemäße) Dispersion **E2** aus β -Ketocarbonyl-funktioneller Organosiliciumverbindung **A1:**

1,26 g an Isotridecylpentaethoxylat, käuflich erwerblich unter dem Handelsnamen Lutensol TO 5 (Fa. BASF) (HLB-Wert: 10,5), 8,52 g einer 80%igen wässrigen Lösung an Isotridecyldecaethoxylat, käuflich erwerblich unter dem Handelsnamen Lutensol TO 108 (Fa. BASF) (HLB-Wert: 13,5), und 6,72 g vollentsalztes Wasser werden in einem Metallbecher vorgelegt und im Trockenschrank auf 60°C für erwärmt. Die nun flüssige Mischung wird mit Hilfe eines Ultra-Turrax T 50 Emulgiergerät (Fa. Janke & Kunkel/IKA) homogenisiert. 70 g der β -Ketocarbonyl-funktionellen Organosiliciumverbindung **A1** werden in dieser Zeit bei 60°C im Trockenschrank aufgeschmolzen und in drei Portionen unter hoher Scherung von 6000 bis 8000 UpM derart zugegeben, dass eine relativ feste steife Phase als Vordispersion

resultiert. Es wird mit 113,5 g vollentsalztem, auf 60°C erwärmtem Wasser portionsweise unter geringer Scherung zur gewünschten Dispersion verdünnt. Es resultiert eine milchig-weiße Dispersion mit einer durchschnittlichen Partikelgröße D(50) von 167 nm bei einer Photonenzählrate von 264 kcps (kilo-Counts per second). Die Dispersion ist auch nach 6-monatiger Lagerung bei Raumtemperatur bzw. 30-tägiger Lagerung bei 50°C homogen und stabil.

**Beispiel 13:** (Erfindungsgemäße) Dispersion **E3** aus β -Ketocarbonyl-funktioneller Organosiliciumverbindung **A1:**

4,34 g Polyoxyethylen(4)laurylether, käuflich erwerblich unter dem Handelsnamen Sympatens-ALM/040 (Fa. Kolb) (HLB-Wert: 9,4), 3,66 g Polyoxyethylen(23)laurylether, käuflich erwerblich unter dem Handelsnamen Sympatens-ALM/230 (Fa. Kolb) (HLB-Wert: 16,7), und 6,80 g vollentsalztes Wasser werden in einem Metallbecher vorgelegt und im Trockenschrank auf 60°C erwärmt. Die nun flüssige Mischung wird mit Hilfe eines Ultra-Turrax T 50 Emulgiergerät (Fa. Janke & Kunkel/IKA) homogenisiert. 70 g der β -Ketocarbonyl-funktionellen Organosiliciumverbindung **A1** werden in dieser Zeit bei 60°C im Trockenschrank aufgeschmolzen und in drei Portionen unter hoher Scherung von 6000 bis 8000 UpM derart zugegeben, dass eine relativ feste steife Phase als Vordispersion resultiert. Es wird mit 115,2 g vollentsalztem, auf 60°C erwärmtem Wasser portionsweise unter geringer Scherung zur gewünschten Dispersion verdünnt. Es resultiert eine milchig-weiße Dispersion mit einer durchschnittlichen Partikelgröße D(50) von 180 nm bei einer Photonenzählrate von 199 kcps (kilo-Counts per second). Die Dispersion ist auch nach 6-monatiger Lagerung bei Raumtemperatur bzw. 30-tägiger Lagerung bei 50°C homogen und stabil.

**(Vergleichs)Beispiel 14:** (Nicht-erfindungsgemäße) Dispersion **VE4** aus β-Ketocarbonyl-funktioneller Organosiliciumverbindung **A1:**

9,60 g Isotridecylhexadecaethoxylat, käuflich erwerblich unter dem Handelsnamen Imbentin T/160 (Fa. Kolb) (HLB-Wert: 15,6) und 3,60 g vollentsalztes Wasser werden in einem Metallbecher vorgelegt und im Trockenschrank auf 60°C erwärmt. Die nun flüssige Mischung wird mit Hilfe eines Ultra-Turrax T 50 Emulgiergerät (Fa. Janke & Kunkel/IKA) homogenisiert. 70 g der β -Ketocarbonyl-funktionellen Organosiliciumverbindung **A1** werden in dieser Zeit bei 60°C im Trockenschrank aufgeschmolzen und in drei Portionen unter hoher Scherung von 6000 bis 8000 UpM derart zugegeben, dass eine relativ feste steife Phase als Vordispersion resultiert. Es wird mit 116,4 g vollentsalztem, auf 60°C erwärmtem Wasser portionsweise unter geringer Scherung zur gewünschten Dispersion verdünnt. Es resultiert eine milchig-weiße Dispersion. Die Dispersion ist nicht stabil, nach 24-stündiger Lagerung bei Raumtemperatur haben sich zwei Phasen gebildet.

(Vergleichs)Beispiel 14 zeigt, dass bei Verwendung ausschließlich eines nicht-ionischen Emulgators (B2) mit einem HLB-Wert von größer 15 keine stabile Dispersion hergestellt werden kann.

Dagegen zeigen die Beispiele 11 bis 13 (Dispersionen **E1** bis **E3**), dass bei Verwendung wenigstens eines nicht-ionischen Emulgators (B1) mit einem HLB-Wert von kleiner gleich 15 lagerstabile Dispersionen erhalten werden.

Auch bei Verwendung eines nicht-ionischen Emulgators (B2) mit einem HLB-Wert von größer 15 zusammen mit einem nicht-ionischen Emulgator (B1) mit einem HLB-Wert von kleiner gleich 15 (wie in Beispiel 13 gezeigt) gelingt die Herstellung einer stabilen Dispersion.

**(Vergleichs)Beispiel 15:** (Nicht-erfindungsgemäße) Dispersion **VE5** aus β-Ketocarbonyl-funktioneller Organosiliciumverbindung **A1:**

5,40 g einer 55%igen wässrigen Lösung von Natrium-($C_{10}$-$C_{13}$)-n-Alkylbenzolsulfonat, käuflich erwerblich unter dem Handelsnamen Disponil LDBS 55 (Fa. BASF), 9,00 g Isotridecylhexadecaethoxylat, käuflich erwerblich unter dem Handelsnamen Imbentin T/160 (Fa. Kolb) (HLB-Wert: 15,6) und 0,90 g vollentsalztes Wasser werden in einem Metallbecher vorgelegt und im Trockenschrank auf 60°C erwärmt. Die flüssige Mischung wird mit Hilfe eines Ultra-Turrax T 50 Emulgiergerät (Fa. Janke & Kunkel/IKA) homogenisiert. 70 g der β -Ketocarbonyl-funktionellen Organosiliciumverbindung **A1** werden in dieser Zeit bei 60°C im Trockenschrank aufgeschmolzen und derart in drei Portionen unter hoher Scherung von 6000 bis 8000 UpM zugegeben. Die erhaltene Vordispersion wird mit 113,2 g vollentsalztem, auf 60°C erwärmtem Wasser portionsweise unter geringer Scherung verdünnt. Es resultiert eine milchig-weiße Dispersion. Die Dispersion ist nicht stabil, bereits nach einer Stunde bei Raumtemperatur haben sich zwei Phasen gebildet.

(Vergleichs)Beispiel 15 zeigt, dass bei Verwendung eines nicht-ionischen Emulgators (B2) mit einem HLB-Wert von größer 15 in Kombination mit einem anionischen Emulgator (B3) keine stabile Dispersion hergestellt werden kann.

**Beispiel 16:** (Erfindungsgemäße) Dispersion **E6** aus β -Ketocarbonyl-funktioneller Organosiliciumverbindung **A1:**

18,2 g einer 33%igen wässrigen Lösung von Natriumlaurylethersulfat, käuflich erwerblich unter dem Handelsnamen Disponil FES 77 (Fa. BASF) und 2,0 g Polyoxyethylen(4)laurylether, käuflich erwerblich unter dem Handelsnamen Sympatens-ALM/040 (Fa. Kolb) (HLB-Wert: 9,4) werden in einem Metallbecher vorgelegt und im Trockenschrank auf 60°C erwärmt. Die nun flüssige Mischung wird mit Hilfe eines Ultra-Turrax T 50 Emulgiergerät (Fa. Janke & Kunkel/IKA) homogenisiert. 70 g der β-Ketocarbonyl-funktionellen Organosiliciumverbindung **A1** werden in dieser Zeit bei 60°C im Trockenschrank aufgeschmolzen und in drei Portionen unter hoher Scherung von 6000 bis 8000 UpM derart zugegeben, dass eine relativ feste steife Phase als Vordispersion resultiert. Es wird mit 109,8 g vollentsalztem, auf 60°C erwärmtem Wasser portionsweise unter geringer Scherung zur gewünschten Dispersion verdünnt. Es resultiert eine milchig-weiße Dispersion mit einer durchschnittlichen Partikelgröße D(50) von 194 nm bei einer Photonenzählrate von 355 kcps (kilo-Counts per second). Die Dispersion ist auch nach 6-monatiger Lagerung bei Raumtemperatur bzw. 30-tägiger Lagerung bei 50°C homogen und stabil.

**Beispiel 17:** (Erfindungsgemäße) Dispersion **E7** aus β -Ketocarbonyl-funktioneller Organosiliciumverbindung **A1:**

6,0 g Laurinsäure, käuflich erwerblich bei der Fa. Merck Schuchardt), 3,9 g einer wässrigen Lösung an Kaliumhydroxid (50%ig) sowie 2,0 g Polyoxyethylen(4)laurylether, käuflich erwerblich unter dem Handelsnamen Sympatens-ALM/040 (Fa. Kolb) (HLB-Wert: 9,4) und 6,7 g vollentsalztes Wasser werden in einem Metallbecher vorgelegt und im Trockenschrank auf 60°C erwärmt. Die nun flüssige Mischung wird mit Hilfe eines Ultra-Turrax T 50 Emulgiergerät (Fa. Janke & Kunkel/IKA) homogenisiert. 70 g der β-Ketocarbonyl-funktionellen Organosiliciumverbindung **A1** werden in dieser Zeit bei 60°C im Trockenschrank aufgeschmolzen und in drei Portionen unter hoher Scherung von 6000 bis 8000 UpM derart zugegeben, dass eine relativ feste steife Phase als Vordispersion resultiert. Es wird mit 110,8 g vollentsalztem, auf 60°C erwärmtem Wasser portionsweise unter geringer Scherung zur gewünschten Dispersion verdünnt. Es resultiert eine milchig-weiße Dispersion mit einer durchschnittlichen Partikelgröße D(50) von 171 nm bei einer Photonenzählrate von 364 kcps (kilo-Counts per second). Die Dispersion wird mit Hilfe eines Exsikkators vorsichtig entlüftet. Die Dispersion ist auch nach 6-monatiger Lagerung bei Raumtemperatur bzw. 30-tägiger Lagerung bei 50°C homogen und stabil.

**Beispiele 18 bis 25:** (Erfindungsgemäße) Dispersionen **E8** bis **E15** aus β-Ketocarbonyl-funktioneller Organosiliciumverbindung **A2** bis **A5** sowie **A7** bis **A10:**

Unter Verwendung der gleichen Typen und Mengen der Emulgator-Wasser-Mischung wie aus Beispiel 17 (6,0 g Laurinsäure, 3,9 g einer wässrigen Lösung an Kaliumhydroxid (50%ig), 2,0 g Polyoxyethylen(4)laurylether (HLB-Wert = 9,4), 6,7 g vollentsalztem Wasser), 70 g β-Ketocarbonyl-funktioneller Organosiliciumverbindung **A2** bis **A5** bzw. **A7** bis **A10** sowie 110,8 g auf 60°C erwärmtes Wasser werden die Dispersionen **E8** bis **E15** hergestellt.

Im Falle der β-Ketocarbonyl-funktionellen Organosiliciumverbindung **A2** resultiert eine milchig-weiße Dispersion **E8** mit einer durchschnittlichen Partikelgröße D(50) von 177 nm bei einer Photonenzählrate von 207 kcps.

Im Falle der β-Ketocarbonyl-funktionellen Organosiliciumverbindung **A3** resultiert eine milchig-weiße Dispersion **E9** mit einer durchschnittlichen Partikelgröße D(50) von 105 nm bei einer Photonenzählrate von 393 kcps.

Im Falle der β-Ketocarbonyl-funktionellen Organosiliciumverbindung **A4** resultiert eine milchig-weiße Dispersion **E10** mit einer durchschnittlichen Partikelgröße D(50) von 153 nm bei einer Photonenzählrate von 271 kcps.

Im Falle der β-Ketocarbonyl-funktionellen Organosiliciumverbindung **A5** resultiert eine milchig-weiße Dispersion **E11** mit einer durchschnittlichen Partikelgröße D(50) von 170 nm bei einer Photonenzählrate von 221 kcps.

Im Falle der β-Ketocarbonyl-funktionellen Organosiliciumverbindung **A7** resultiert eine milchig-weiße Dispersion **E12** mit einer durchschnittlichen Partikelgröße D(50) von 248 nm bei einer Photonenzählrate von 311 kcps.

Im Falle der β-Ketocarbonyl-funktionellen Organosiliciumverbindung **A8** resultiert eine milchig-weiße Dispersion **E13** mit einer durchschnittlichen Partikelgröße D(50) von 361 nm bei einer Photonenzählrate von 254 kcps.

Im Falle der β-Ketocarbonyl-funktionellen Organosiliciumverbindung **A9** resultiert eine milchig-weiße Dispersion **E14** mit einer durchschnittlichen Partikelgröße D(50) von 182 nm bei einer Photonenzählrate von 243 kcps.

Im Falle der β-Ketocarbonyl-funktionellen Organosiliciumverbindung **A10** resultiert eine milchig-weiße Dispersion **E15** mit einer durchschnittlichen Partikelgröße D(50) von 380 nm bei einer Photonenzählrate von 237 kcps.

Sämtliche Dispersionen **E8** bis **E15,** bei denen neben einem anionischen Emulgator (B3) ein nicht-ionischer Emulgator (B1) mit einem HLB-Wert von kleiner gleich 15 eingesetzt wird, sind auch nach 6-monatiger Lagerung bei Raumtemperatur bzw. 30-tägiger Lagerung bei 50°C homogen und stabil.

**(Vergleichs)Beispiel 26:** (Nicht-erfindungsgemäße) Dispersion **VE16** aus β-Ketocarbonyl-funktioneller Organosiliciumverbindung **A1:**

16,0 g einer 66%igen wässrigen Lösung an Diisodecylsulfosuccinat-Natriumsalz, käuflich erwerblich unter dem Handelsnamen Disponil SUS IC 10 bei der Fa. BASF, werden in einem Metallbecher vorgelegt und im Trockenschrank auf 60°C erwärmt. 70 g der β-Ketocarbonyl-funktionellen Organosiliciumverbindung **A1** werden in dieser Zeit bei 60°C

im Trockenschrank aufgeschmolzen und in drei Portionen unter hoher Scherung von 6000 bis 8000 UmP langsam zugegeben. Es resultiert eine lotionsartige Vordispersion. Es wird mit 113,5 g vollentsalztem, auf 60°C erwärmtem Wasser portionsweise unter geringer Scherung zur gewünschten Dispersion verdünnt. Die resultierende Dispersion ist milchig-weiß mit einer durchschnittlichen Partikelgröße von 869 nm. Innerhalb von zwei Stunden bilden sich zwei Phasen aus. Die Dispersion ist nicht lagerstabil.

**(Vergleichs)Beispiel 27:** (Nicht-erfindungsgemäße) Dispersion **VE17** aus β-Ketocarbonyl-funktioneller Organosiliciumverbindung **A1:**

12,2 g einer 66%igen wässrigen Lösung an Diisodecylsulfosuccinat-Natriumsalz, käuflich erwerblich unter dem Handelsnamen Disponil SUS IC 10 bei der Fa. BASF, und 4,2 g Wasser werden in einem Metallbecher vorgelegt, gemischt und im Trockenschrank auf 60°C erwärmt. 70 g der β-Ketocarbonyl-funktionellen Organosiliciumverbindung **A1** werden in dieser Zeit bei 60°C im Trockenschrank aufgeschmolzen und in drei Portionen unter hoher Scherung von 6000 bis 8000 UmP langsam zugegeben. Es resultiert eine cremeartige Vordispersion. Es wird mit 113,6 g vollentsalztem, auf 60°C erwärmtem Wasser portionsweise unter geringer Scherung zur gewünschten Dispersion verdünnt. Die resultierende Dispersion ist milchig-weiß, bildet aber innerhalb einer Stunde zwei Phasen aus. Die Dispersion ist somit nicht lagerstabil.

**(Vergleichs)Beispiel 28:** (Nicht-erfindungsgemäße) Dispersion **VE18** aus β-Ketocarbonyl-funktioneller Organosiliciumverbindung **A**1:

70 g der β-Ketocarbonyl-funktionellen Organosiliciumverbindung **A1** werden nach der gleichen Weise emulgiert wie in Beispiel 17 beschrieben, wobei als Emulgator 10,74 g einer 75%igen wässrigen Lösung an Di-2-Ethylhexylsulfosuccinat-Natriumsalz, käuflich erwerblich unter dem Handelsnamen Disponil SUS IC 875 bei der Fa. BASF, und 9,4 g Wasser vorgelegt werden.

Die Verdünnung der Vordispersion mit 109,9 g Wasser resultiert in einer milchig-weißen Dispersion, die aber innerhalb einer Stunde zwei Phasen ausbildet. Die Dispersion ist somit nicht lagerstabil.

**(Vergleichs)Beispiel 29:** (Nicht-erfindungsgemäße) Dispersion **VE19** aus (nicht-erfindungsgemäßer) β-Ketocarbonylfunktioneller Organosiliciumverbindung **VA6:**

70 g der β-Ketocarbonyl-funktionellen Organosiliciumverbindung **VA6** (β-Ketocarbonyl-Funktionalität mit nicht erfindungsgemäßer Gruppe $R^3$ = H) werden nach der gleichen Weise emulgiert wie in Beispiel 18 beschrieben, wobei als Emulgator 10,74 g einer 75%igen wässrigen Lösung an Di-2-Ethylhexylsulfo-succinat-Natriumsalz, käuflich erwerblich unter dem dem Handelsnamen Disponil SUS IC 875 bei der Fa. BASF, und 9,4 g Wasser vorgelegt werden.
Es konnte keine Dispersion hergestellt werden.

(Vergleichs)Beispiele 26, 27, 28 und 29 zeigen, dass die Emulgierung von β-Ketocarbonyl-funktionellen Organosiliciumverbindungen (A) unter Verwendung ausschließlich anionischer Emulgatoren, insbesondere der Sulfosuccinate, zu keinen lagerstabilen Dispersionen führt. Auch die Verwendung der nicht-erfindungsgemäßen β-Ketocarbonylfunktionellen Organosiliciumverbindung **VA6** (β-Ketocarbonyl-Funktionalität mit nicht erfindungsgemäßer Gruppe $R^3$ = H) führt zu keiner Dispersionsbildung. Die Herstellung lagerstabiler Dispersionen gelingt auch nicht, wenn die Emulgator- und Wasser-Menge zur Bildung der Vordispersion, wie in (Vergleichs)Beispielen 26 und 27 gezeigt, variiert werden.

Durch die Kombination von anionischen Emulgatoren (B3), insbesondere von Carboxylaten, mit nicht-ionischen Emulgatoren (B1) mit einem HLB-Wert von kleiner gleich 15, wie in den Beispielen 17 bis 25 gezeigt, gelingt es dagegen, lagerstabile Dispersionen herzustellen.

**Beispiel 30:** Kombination der erfindungsgemäßen Dispersionen mit Aminölemulsionen (F') :

Emulsion **FE20** aus einer aminofunktionellen Organosiliciumverbindung (F):

9,7 g einer 80%-igen wässrigen Lösung aus Polyoxyethylen(10)isotridecylether, käuflich erwerblich unter dem Handelsnamen Lutensol TO 108 (Fa. BASF) (HLB-Wert = 13,7) und 2,9 g vollentsalztes Wasser werden in einem Metallbecher vorgelegt. Die flüssige Mischung wird mit Hilfe eines Ultra-Turrax T 50 Dispergiergerät (Fa. Janke & Kunkel/IKA) homogenisiert. 70 g eines gemischt Hydroxy-/Methoxyterminierten Copolymers aus (2-Aminoethyl-3-aminopropyl)-methylsiloxy- und Dimethylsiloxyeinheiten der kinematischen Viskosität von 3552 $mm^2/s$ (25,0°C; Kapillar-Nr. IV) und einer Aminzahl von 0,14 mmol/g werden in drei Portionen unter hoher Scherung von 6000 bis 8000 UpM derart zugegeben, dass eine relativ feste steife Phase als Vordispersion resultiert. Es wird mit 118,0 g vollentsalztem Wasser portionsweise unter geringer Scherung verdünnt und die resultierende Dispersion mit 0,3 g 80%-iger Essigsäure in

Wasser stabilisiert. Es resultiert eine milchig-weiße Dispersion mit einer durchschnittlichen Partikelgröße von 141 nm. Die Dispersion wird mit Hilfe eines Exsikkators vorsichtig entlüftet.

Die erfindungsgemäßen Dispersionen **E7** bis **E15** werden mit der Emulsion **FE20** aus einer aminofunktionellen Organosiliciumverbindung (F) in den in Tabelle 1 angegebenen Mengenanteilen miteinander gemischt. In allen Fällen resultieren milchig weiße Formulierungen, die homogen bleiben und lagerstabil sind.

Tabelle 1:

| Beispiel | Menge an erfindungsgemäßer Dispersion | Menge an Aminölemulsion (F') |
|---|---|---|
| 30a | 25 g **E7** | 15 g **FE20** |
| 30b | 13 g **E8** | 27 g **FE20** |
| 30c | 6 g **E9** | 34 g **FE20** |
| 30d | 14 g **E10** | 36 g **FE20** |
| 30e | 39 g **E11** | 1 g **FE20** |
| 30f | 25 g **E12** | 16 g **FE20** |
| 30g | 25 g **E13** | 16 g **FE20** |
| 30h | 25 g **E14** | 16 g **FE20** |
| 30i | 25 g **E15** | 16 g **FE20** |

**Beispiel 31:** Verwendung der erfindungsgemäßen wässrigen Dispersionen zur Ausrüstung von faserigen Substraten:

Die in Tabelle 1 gezeigten Formulierungen werden mit 5 g einer wässrigen Lösung an Zirkon(IV)-acetat (Anteil an $ZrO_2$: 22 Gew.%) versetzt. Die erhaltenen Mischungen werden für die Ausrüstung auf Textilien mit Wasser auf einen Liter Flotte verdünnt und dann folgendermaßen auf textile Flächengebilde aufgebracht:
Verwendet wird ein DIN A4 großes Stück einer gebleichten, unausgerüsteten Polyester-Baumwoll-Popeline (65% PET, 35% CO) mit einem Flächengewicht von 185 g/m2.
Der Stoff wird jeweils in eine wässrige Flotte getaucht und anschließend mit einem Zweiwalzenfoulard auf 50 % Flottenaufnahme abgequetscht, aufgespannt und in einem Mathis-Laborspannrahmen bei 150°C 5 Minuten getrocknet. Danach wird die Ware mindestens 72 Stunden im Klimaraum bei 23°C und 60 % Luftfeuchtigkeit klimatisiert, damit sie zur Bestimmung der Hydrophobierung ausreichend konditioniert ist.
Nach Durchführung des Spraytests werden die Textilien über Nacht im Klimaraum an der Wäscheleine getrocknet.

Für die Untersuchung der Waschechtheiten werden alle ausgerüsteten Textilien einmal zusammen mit ca. 2 kg Ballaststoff in einer Haushaltswaschmaschine der Marke MIELE Softtronic W 1935 mit dem Waschprogramm Express 20 für 20 Minuten bei 40°C gewaschen und geschleudert. Als Waschtensid werden dabei 5 g eines Flüssigwaschmittels der Marke "Spee Feinwaschmittel" von der Firma Henkel dosiert.
Anschließend wird die Ware mindestens 12 Stunden im Klimaraum bei 23°C und 60 % Luftfeuchtigkeit getrocknet und klimatisiert. Zur Entfernung des Waschknitters werden die Prüflinge mit einem Bügeleisen der Marke Philips Azur 4043 auf Stufe II gebügelt. Die Warenmuster werden dann erneut auf Hydrophobie nach der Spray-Test Methode geprüft.

In Tabelle 2 sind die Ergebnisse der ausgerüsteten Textilien zusammengefasst.

Tabelle 2:

| Beispiel | Formulierung aus Beispiel 30 + 5 g Zirkon(IV)-acetat | Spray-Test | Spray-Test gewaschen |
|---|---|---|---|
| 31a | 30a | 100 | 100 |
| 31b | 30b | 100 | 90 |
| 31c | 30c | 100 | 90 |
| 31d | 30d | 100 | 90 |
| 31e | 30e | 100 | 80 |
| 31f | 30f | 100 | 90 |
| 31g | 30g | 100 | 100 |
| 31h | 30h | 100 | 95 |

(fortgesetzt)

| Beispiel | Formulierung aus Beispiel 30 + 5 g Zirkon(IV)-acetat | Spray-Test | Spray-Test gewaschen |
|---|---|---|---|
| 31i | 30i | 100 | 90 |

Sämtliche Textilien, die mit den in Tabelle 2 gezeigten Formulierungen ausgerüstet wurden, weisen gute Spraytestwerte (100) sowie sehr gute Waschfestigkeiten auf.
Sämtliche nach den Vorgaben der Ausführungsbeispiele ausgerüsteten Textilien zeigen ferner einen angenehmen Weichgriff.

**Patentansprüche**

1. Wässrige Dispersionen enthaltend

   (A) β-Ketocarbonyl-funktionelle Organosiliciumverbindungen, die mindestens einen Si-gebundenen Rest **A** der allgemeinen Formel

   $$(Si)\text{-}L^1\text{-}[X^1\text{-}L^2\text{-}]_yX^2 \qquad (I)$$

   enthalten, wobei

   $L^1$ gleich oder verschieden ist und einen zweiwertigen, Si-C-gebundenen Kohlenwasserstoffrest mit 1 bis 18 C-Atomen bedeutet,
   $L^2$ gleich oder unterschiedlich ist und einen zweiwertigen Kohlenwasserstoffrest mit 1 bis 6 C-Atomen bedeutet,
   $X^1$ ein Rest der Formel -O-, -NZ-, -$NR^2$- oder -S-, vorzugsweise -NZ-, bedeutet,
   $X^2$ ein Rest der Formel -0-Z, -NH-Z, -$NR^2$-Z, -S-Z, vorzugsweise -NH-Z, bedeutet,
   Z ein Rest der Formel -C(=O)-$CHR^3$-C(=O)-$CH_2R^3$ ist,
   $R^2$ einen einwertigen Kohlenwasserstoffrest mit 1 bis 18 C-Atomen bedeutet,
   $R^3$ einen einwertigen, gegebenenfalls substituierten Kohlenwasserstoffrest mit mindestens 12 C-Atomen, vorzugsweise mit mindestens 14 C-Atome, bedeutet,
   y 0, 1, 2 oder 3, vorzugsweise 0 oder 1, besonders bevorzugt 0, ist und
   (Si)- die Bindung zum Si-Atom bedeutet,

   (B1) mindestens einen nicht-ionischen Emulgator mit einem HLB-Wert von kleiner gleich 15, wobei der HLB-Wert gemäß der in der Beschreibung angegebenen Formel errechnet wird, und
   (C) Wasser.

2. Wässrige Dispersionen nach Anspruch 1, **dadurch gekennzeichnet, dass**
   (B2) mindestens ein weiterer nicht-ionischer Emulgator mit einem HLB-Wert von größer 15, wobei der HLB-Wert gemäß der in der Beschreibung angegebenen Formel errechnet wird, enthalten ist.

3. Wässrige Dispersionen nach Anspruch 1 oder 2, **dadurch gekennzeichnet, dass**
   (B3) mindestens ein anionischer Emulgator enthalten ist.

4. Wässrige Dispersionen nach Anspruch 1, 2 oder 3, **dadurch gekennzeichnet, dass**
   (B4) kationische Emulgatoren enthalten sind.

5. Wässrige Dispersionen nach einem der Ansprüche 1 bis 4, **dadurch gekennzeichnet, dass**
   (D) nichtwässrige Lösungsmittel oder Co-Emulgatoren enthalten sind.

6. Wässrige Dispersionen nach einem der Ansprüche 1 bis 5, **dadurch gekennzeichnet, dass**
   (E) Hilfsstoffe ausgewählt aus der Gruppe von pH-Regulierungsmittel, Salze, Schauminhibitoren, Verdicker, Schutzkolloide, Konservierungsmittel, Desinfektionsmittel, Netzmittel, Korrosionsinhibitoren, Farbstoffe, Duftstoffe und deren Mischungen
   enthalten sind.

**7.** Wässrige Dispersionen nach einem der Ansprüche 1 bis 6, **dadurch gekennzeichnet, dass** als β-Ketocarbonyl-funktionelle Organosiliciumverbindungen (A) Organopolysiloxane der allgemeinen Formel

$$A_dR^4_{(3-d)}SiO(SiR_2O)_e(SiR^4AO)_fSiR^4_{(3-d)}A_d \qquad (III),$$

eingesetzt werden, wobei

A ein Rest der Formel (I) ist und die in Anspruch 1 dafür angegebene Bedeutung hat,
$R^4$ gleich oder verschieden ist und einen Rest R oder $OR^1$ bedeutet,
R einen einwertigen, gegebenenfalls substituierten Kohlenwasserstoffrest mit 1 bis 18 C-Atomen je Rest bedeutet,
$R^1$ ein Wasserstoffatom oder einen Alkylrest mit 1 bis 8 C-Atomen bedeutet,
d 0 oder 1,
e 0 oder eine ganze Zahl von 1 bis 2000 und
f 0 oder eine ganze Zahl von 1 bis 20 ist,
mit der Maßgabe, dass durchschnittlich mindestens ein Rest A je Molekül enthalten ist, was bedeutet, dass f ungleich 0 ist, wenn d gleich 0 ist bzw.
d gleich 1 ist, wenn f gleich 0 ist.

**8.** Wässrige Dispersionen nach einem der Ansprüche 1 bis 6, **dadurch gekennzeichnet, dass** sie enthalten

(A) β-Ketocarbonyl-funktionelle Organosiliciumverbindungen nach Anspruch 1 oder 7,
(B1) mindestens einen nicht-ionischen Emulgator mit einem HLB-Wert von kleiner gleich 15, wobei der HLB-Wert gemäß der in der Beschreibung angegebenen Formel errechnet wird, mindestens einen weiteren Emulgator ausgewählt aus der Gruppe der

(B2) nicht-ionischen Emulgatoren mit einem HLB-Wert von größer 15, wobei der HLB-Wert gemäß der in der Beschreibung angegebenen Formel errechnet wird,
(B3) anionischen Emulgatoren,
und Mischungen von (B2) und (B3)

gegebenenfalls (B4) kationische Emulgatoren,
(C) Wasser,
gegebenenfalls (D) nichtwässrige Lösungsmittel oder Co-Emulgatoren und
gegebenenfalls (E) Hilfsstoffe gemäß Anspruch 6.

**9.** Verfahren zur Herstellung der wässrigen Dispersionen nach einem der Ansprüche 1 bis 8 durch Vermischen von

(A) β-Ketocarbonyl-funktionelle Organosiliciumverbindungen nach Anspruch 1 oder 7 mit
(B1) mindestens einem nicht-ionischen Emulgator mit einem HLB-Wert von kleiner gleich 15, wobei der HLB-Wert gemäß der in der Beschreibung angegebenen Formel errechnet wird,
(C) Wasser,

gegebenenfalls (B2) mindestens einem weiteren nicht-ionischen Emulgatoren mit einem HLB-Wert von größer 15, wobei der HLB-Wert gemäß der in der Beschreibung angegebenen Formel errechnet wird,
gegebenenfalls (B3) mindestens einem anionischen Emulgator, gegebenenfalls (B4) kationischen Emulgatoren,
gegebenenfalls (D) nichtwässrigen Lösungsmittel oder Co-Emulgatoren und
gegebenenfalls (E) Hilfsstoffen gemäß Anspruch 6.

**10.** Verfahren zur Ausrüstung von faserigen Substraten, vorzugsweise Textilien, mit Zusammensetzungen enthaltend wässrige Dispersionen nach einem der Ansprüche 1 bis 8 oder hergestellt nach Anspruch 9.

**11.** Zusammensetzungen enthaltend
wässrige Dispersionen nach einem der Ansprüche 1 bis 8 oder hergestellt nach Anspruch 9,
aminofunktionelle Organosiliciumverbindungen (F) oder deren wässrige Dispersionen
und gegebenenfalls Organometallverbindungen (G).

**12.** Zusammensetzungen nach Anspruch 11, **dadurch gekennzeichnet, dass** als aminofunktionelle Organosiliciumverbindungen (F) Organopolysiloxane der allgemeinen Formel

$$Qu^{R4}{}_{(3-u)}SiO(SiR_2O)_v(SiR^4QO)_wSiR^4{}_{(3-u)}Q_u \qquad (X)$$

eingesetzt werden, wobei

Q einen Rest der Formel

$$(Si)\text{-}L^1\text{-}[X^5\text{-}L^2\text{-}]_zX^6 \qquad (VIII)$$

bedeutet,
R einen einwertigen, gegebenenfalls substituierten Kohlenwasserstoffrest mit 1 bis 18 C-Atomen je Rest bedeutet,
$R^1$ ein Wasserstoffatom oder einen Alkylrest mit 1 bis 8 C-Atomen bedeutet,
$R^2$ einen einwertigen Kohlenwasserstoffrest mit 1 bis 18 C-Atomen bedeutet,
$R^4$ gleich oder verschieden ist und einen Rest R oder $OR^1$ bedeutet,
$L^1$ gleich oder verschieden ist und einen zweiwertigen, Si-C-gebundenen Kohlenwasserstoffrest mit 1 bis 18 C-Atomen bedeutet,
$L^2$ gleich oder unterschiedlich ist und einen zweiwertigen Kohlenwasserstoffrest mit 1 bis 6 C-Atomen bedeutet,
$X^5$ ein Rest der Formel -NH- oder $-NR^2-$, vorzugsweise -NHbedeutet,
$X^6$ ein Rest der Formel $-NH_2$ oder $-NR^2H$, vorzugsweise $-NH_2$ bedeutet, und
(Si)- die Bindung zum Si-Atom bedeutet,
u 0 oder 1,
v 0 oder eine ganze Zahl von 1 bis 2000 und
w 0 oder eine ganze Zahl von 1 bis 20 ist,
z 0, 1, 2 oder 3, vorzugsweise 0 oder 1, besonders bevorzugt 1, ist,
mit der Maßgabe, dass durchschnittlich mindestens ein Rest
Q je Molekül enthalten ist, was bedeutet, dass
w ungleich 0 ist, wenn u gleich 0 ist bzw.
u gleich 1 ist, wenn w gleich 0 ist.

**13.** Zusammensetzungen nach Anspruch 11 oder 12, **dadurch gekennzeichnet, dass** als Organometallverbindungen (G) Amine, Alkoholate, carbonsaure Salze, phosphorsaure Salze oder Chelate von Metallen ausgewählt aus der Gruppe von Pb, Zn, Zr, Sb, Fe, Cd, Sn, Ti, Ba, Ca, Mn, V, Al und Co, vorzugsweise Alkoholate oder carbonsaure Salze von Titan oder Zirkon, bevorzugt Butyltitanat, Zirkonoctoat oder Zirkonacetat, eingesetzt werden.

**14.** Verfahren zur Ausrüstung von faserigen Substraten, vorzugsweise Textilien, mit Zusammensetzungen nach Anspruch 11, 12 oder 13.

**15.** Verfahren nach Anspruch 14, **dadurch gekennzeichnet, dass** die Zusammensetzungen nach Anspruch 11, 12 oder 13 auf die faserigen Substrate, vorzugsweise Textilien, aufgetragen und anschließend die behandelten faserigen Substrate, vorzugsweise die behandelten Textilien, trocknen gelassen werden.

**16.** Verfahren zur Imprägnierung bzw. Hydrophobierung von faserigen Substraten, vorzugsweise Textilien, mit Zusammensetzungen nach Anspruch 11, 12 oder 13, wobei die Zusammensetzungen nach Anspruch 11, 12 oder 13 auf die faserigen Substrate, vorzugsweise Textilien, aufgetragen und anschließend die behandelten faserigen Substrate, vorzugsweise die behandelten Textilien, trocknen gelassen werden.

## Claims

**1.** Aqueous dispersions comprising

(A) β-ketocarbonyl-functional organosilicon compounds which comprise at least one Si-bonded radical **A** of the general formula

$$(Si)\text{-}L^1\text{-}[X^1\text{-}L^2\text{-}]_yX^2 \qquad (I)$$

where

$L^1$ is identical or different and is a divalent, Si-C-bonded hydrocarbon radical having 1 to 18 carbon atoms,
$L^2$ is identical or different and is a divalent hydrocarbon radical having 1 to 6 carbon atoms,
$X^1$ is a radical of the formula -O-, -NZ-, $-NR^2-$ or -S-, preferably -NZ-,
$X^2$ is a radical of the formula -O-Z, -NH-Z,$-NR^2-Z$, -S-Z, preferably -NH-Z,
Z is a radical of the formula $-C(=O)-CHR^3-C(=O)-CH_2R^3$,
$R^2$ is a monovalent hydrocarbon radical having 1 to 18 carbon atoms,
$R^3$ is a monovalent, optionally substituted hydrocarbon radical having at least 12 carbon atoms, preferably having at least 14 carbon atoms,
y is 0, 1, 2 or 3, preferably 0 or 1, more preferably 0, and
(Si)- denotes the bond to the Si atom,
(B1) at least one nonionic emulsifier having an HLB of not more than 15, where the HLB is calculated according to the formula stated in the description, and
(C) water.

2. Aqueous dispersions according to Claim 1, **characterized in that** they comprise
(B2)at least one further nonionic emulsifier having an HLB of greater than 15, where the HLB is calculated according to the formula stated in the description.

3. Aqueous dispersions according to Claim 1 or 2, **characterized in that** they comprise
(B3)at least one anionic emulsifier.

4. Aqueous dispersions according to Claim 1, 2 or 3, **characterized in that** they comprise
(B4)cationic emulsifiers.

5. Aqueous dispersions according to any of Claims 1 to 4, **characterized in that** they comprise
(D) nonaqueous solvents or coemulsifiers.

6. Aqueous dispersions according to any of Claims 1 to 5, **characterized in that** they comprise
(E) auxiliaries selected from the group of pH regulators, salts, foam inhibitors, thickeners, protective colloids, preservatives, disinfectants, wetting agents, corrosion inhibitors, dyes, fragrances, and mixtures thereof.

7. Aqueous dispersions according to any of Claims 1 to 6, **characterized in that** β-ketocarbonyl-functional organosilicon compounds (A) used comprise organopolysiloxanes of the general formula

$$A_dR^4_{(3-d)}SiO(SiR_2O)_e(SiR^4AO)_fSiR^4_{(3-d)}A_d \qquad (III),$$

where

A is a radical of the formula (I) and has the definition stated therefor in Claim 1,
$R^4$ is identical or different and is a radical R or $OR^1$,
R is a monovalent, optionally substituted hydrocarbon radical having 1 to 18 carbon atoms per radical,
$R^1$ is a hydrogen atom or an alkyl radical having 1 to 8 carbon atoms,
d is 0 or 1,
e is 0 or an integer from 1 to 2000, and
f is 0 or an integer from 1 to 20,
with the proviso that there is on average at least one radical A per molecule, meaning that, respectively,
if d is 0, f is not 0, and
if f is 0, d is 1.

8. Aqueous dispersions according to any of Claims 1 to 6, **characterized in that** they comprise

(A) β-ketocarbonyl-functional organosilicon compounds of Claim 1 or 7,
(B1) at least one nonionic emulsifier having an HLB of not more than 15, where the HLB is calculated according to the formula stated in the description,
at least one further emulsifier selected from the group of

(B2) nonionic emulsifiers having an HLB of greater than 15, where the HLB is calculated according to the formula stated in the description,
(B3) anionic emulsifiers,
and mixtures of (B2) and (B3),

optionally (B4) cationic emulsifiers,
(C) water,

optionally (D) nonaqueous solvents or coemulsifiers, and optionally (E) auxiliaries according to Claim 6.

**9.** Method for producing the aqueous dispersions according to any of Claims 1 to 8 by mixing

(A) β-ketocarbonyl-functional organosilicon compounds of Claim 1 or 7 with
(B1) at least one nonionic emulsifier having an HLB of not more than 15, where the HLB is calculated according to the formula stated in the description,
(C) water,

optionally (B2) at least one further nonionic emulsifier having an HLB of greater than 15, where the HLB is calculated according to the formula stated in the description,
optionally (B3) at least one anionic emulsifier, optionally (B4) cationic emulsifiers,
optionally (D) nonaqueous solvents or coemulsifiers, and
optionally (E) auxiliaries according to Claim 6.

**10.** Method of finishing fibrous substrates, preferably textiles, with compositions comprising aqueous dispersions of any of Claims 1 to 8 or produced as in Claim 9.

**11.** Compositions comprising
aqueous dispersions of any of Claims 1 to 8 or produced as in Claim 9,
amino-functional organosilicon compounds (F) or aqueous dispersions thereof,
and optionally organometallic compounds (G).

**12.** Compositions according to Claim 11, **characterized in that** amino-functional organosilicon compounds (F) used comprise
organopolysiloxanes of the general formula

$$Q_uR^4_{(3-u)}SiO(SiR_2O)_v(SiR^4QO)_wSiR^4_{(3-u)}Q_u \qquad (X)$$

where

Q is a radical of the formula

$$(Si)\text{-}L^1\text{-}[X^5\text{-}L^2\text{-}]_zX^6 \qquad (VIII),$$

R is a monovalent, optionally substituted hydrocarbon radical having 1 to 18 carbon atoms per radical,
$R^1$ is a hydrogen atom or an alkyl radical having 1 to 8 carbon atoms,
$R^2$ is a monovalent hydrocarbon radical having 1 to 18 carbon atoms,
$R^4$ is identical or different and is a radical R or $OR^1$,
$L^1$ is identical or different and is a divalent, SiC-bonded hydrocarbon radical having 1 to 18 carbon atoms,
$L^2$ is identical or different and is a divalent hydrocarbon radical having 1 to 6 carbon atoms,
$X^5$ is a radical of the formula -NH- or $-NR^2-$, preferably -NH-,
$X^6$ is a radical of the formula $-NH_2$ or $-NR^2H$, preferably $-NH_2$, and
(Si)- denotes the bond to the Si atom,
u is 0 or 1,
v is 0 or an integer from 1 to 2000, and
w is 0 or an integer from 1 to 20,
z is 0, 1, 2 or 3, preferably 0 or 1, more preferably 1,
with the proviso that there is on average at least one radical Q per molecule, meaning that, respectively, if u is 0, w is not 0, and

if w is 0, u is 1.

13. Compositions according to Claim 11 or 12, **characterized in that** organometallic compounds (G) used comprise amines, alkoxides, carboxylic acid salts, phosphoric acid salts or chelates of metals selected from the group of Pb, Zn, Zr, Sb, Fe, Cd, Sn, Ti, Ba, Ca, Mn, V, Al, and Co, preferably alkoxides or carboxylic acid salts of titanium or zirconium, more preferably butyl titanate, zirconium octoate or zirconium acetate.

14. Method for finishing fibrous substrates, preferably textiles, with compositions according to Claim 11, 12 or 13.

15. Method according to Claim 14, **characterized in that** the compositions according to Claim 11, 12 or 13 are applied to the fibrous substrates, preferably textiles, and subsequently the treated fibrous substrates, preferably the treated textiles, are allowed to dry.

16. Method for impregnating and/or hydrophobizing fibrous substrates, preferably textiles, with compositions according to Claim 11, 12 or 13, where the compositions according to Claim 11, 12 or 13 are applied to the fibrous substrates, preferably textiles, and subsequently the treated fibrous substrates, preferably the treated textiles, are allowed to dry.

## Revendications

1. Dispersions aqueuses contenant :

(A) des composés d'organosilicium à fonction β-cétocarbonyle, qui contiennent au moins un radical relié à Si **A** de la formule générale :

$$(Si)-L^1-[X^1-L^2-]_yX^2 \qquad (I)$$

dans laquelle

$L^1$ est identique ou différent et signifie un radical hydrocarboné bivalent relié à Si-C contenant 1 à 18 atomes C,
les $L^2$ sont identiques ou différents et signifient un radical hydrocarboné bivalent contenant 1 à 6 atomes C,
$X^1$ signifie un radical de la formule -O-, -NZ-, $-NR^2-$ ou -S-, de préférence -NZ-,
$X^2$ signifie un radical de la formule -O-Z, -NH-Z, $-NR^2-Z$, -S-Z, de préférence -NH-Z,
Z est un radical de la formule $-C(=O)-CHR^3-C(=O)-CH_2R^3$,
$R^2$ signifie un radical hydrocarboné monovalent contenant 1 à 18 atomes C,
$R^3$ signifie un radical hydrocarboné monovalent, éventuellement substitué, contenant au moins 12 atomes C, de préférence contenant au moins 14 atomes C,
y signifie 0, 1, 2 ou 3, de préférence 0 ou 1, de manière particulièrement préférée 0, et
(Si)- signifie la liaison à l'atome Si,
(B1) au moins un émulsifiant non ionique ayant une valeur HLB inférieure ou égale à 15, la valeur HLB étant calculée selon la formule indiquée dans la description, et
(C) de l'eau.

2. Dispersions aqueuses selon la revendication 1, **caractérisées en ce que**
(B2) au moins un émulsifiant non ionique supplémentaire ayant une valeur HLB supérieure à 15, la valeur HLB étant calculée selon la formule indiquée dans la description, est contenu.

3. Dispersions aqueuses selon la revendication 1 ou 2, **caractérisées en ce que**
(B3) au moins un émulsifiant anionique est contenu.

4. Dispersions aqueuses selon la revendication 1, 2 ou 3, **caractérisées en ce que**
(B4) des émulsifiants cationiques sont contenus.

5. Dispersions aqueuses selon l'une quelconque des revendications 1 à 4, **caractérisées en ce que**
(D) des solvants ou co-émulsifiants non aqueux sont contenus.

6. Dispersions aqueuses selon l'une quelconque des revendications 1 à 5, **caractérisées en ce que**

(E) des adjuvants choisis dans le groupe constitué par les agents de régulation du pH, les sels, les inhibiteurs de mousse, les épaississants, les colloïdes protecteurs, les conservateurs, les désinfectants, les agents mouillants, les inhibiteurs de corrosion, les colorants, les parfums et leurs mélanges
sont contenus.

**7.** Dispersions aqueuses selon l'une quelconque des revendications 1 à 6, **caractérisées en ce qu'**en tant que composés d'organosilicium à fonction β-cétocarbonyle (A), des organopolysiloxanes de la formule générale :

$$A_dR^4_{(3-d)}SiO(SiR_2O)_e(SiR^4AO)_fSiR^4_{(3-d)}A_d \qquad (III)$$

sont utilisés, dans laquelle

A est un radical de la formule (I) et a la signification indiquée dans la revendication 1,
les $R^4$ sont identiques ou différents et signifient un radical R ou $OR^1$,
R signifie un radical hydrocarboné monovalent, éventuellement substitué, contenant 1 à 18 atomes C par radical,
$R^1$ signifie un atome d'hydrogène ou un radical alkyle contenant 1 à 8 atomes C,
d signifie 0 ou 1,
e signifie 0 ou un nombre entier de 1 à 2 000, et
f signifie 0 ou un nombre entier de 1 à 20,
à condition qu'en moyenne au moins un radical A par molécule soit contenu, ce qui signifie que
f est différent de 0 lorsque d signifie 0 et que
d signifie 1 lorsque f signifie 0.

**8.** Dispersions aqueuses selon l'une quelconque des revendications 1 à 6, **caractérisées en ce qu'**elles contiennent :

(A) des composés d'organosilicium à fonction β-cétocarbonyle selon la revendication 1 ou 7,
(B1) au moins un émulsifiant non ionique ayant une valeur HLB inférieure ou égale à 15, la valeur HLB étant calculée selon la formule indiquée dans la description,
au moins un émulsifiant supplémentaire choisi dans le groupe constitué par :

(B2) les émulsifiants non ioniques ayant une valeur HLB supérieure à 15, la valeur HLB étant calculée selon la formule indiquée dans la description,
(B3) les émulsifiants anioniques,
et les mélanges de (B2) et (B3),

éventuellement (B4) des émulsifiants cationiques,
(C) de l'eau,

éventuellement (D) des solvants ou co-émulsifiants non aqueux, et
éventuellement (E) des adjuvants selon la revendication 6.

**9.** Procédé de fabrication des dispersions aqueuses selon l'une quelconque des revendications 1 à 8 par mélange de :

(A) des composés d'organosilicium à fonction β-cétocarbonyle selon la revendication 1 ou 7, avec
(B1) au moins un émulsifiant non ionique ayant une valeur HLB inférieure ou égale à 15, la valeur HLB étant calculée selon la formule indiquée dans la description,
(C) de l'eau,

éventuellement (B2) au moins un émulsifiant non ionique supplémentaire ayant une valeur HLB supérieure à 15, la valeur HLB étant calculée selon la formule indiquée dans la description,
éventuellement (B3) au moins un émulsifiant anionique, éventuellement (B4) des émulsifiants cationiques, éventuellement (D) des solvants ou co-émulsifiants non aqueux, et
éventuellement (E) des adjuvants selon la revendication 6.

**10.** Procédé de traitement de substrats fibreux, de préférence de textiles, avec des compositions contenant des dispersions aqueuses selon l'une quelconque des revendications 1 à 8 ou fabriquées selon la revendication 9.

**11.** Compositions contenant :

des dispersions aqueuses selon l'une quelconque des revendications 1 à 8 ou fabriquées selon la revendication 9,
des composés d'organosilicium à fonction amino (F) ou leurs dispersions aqueuses,
et éventuellement des composés organométalliques (G).

**12.** Compositions selon la revendication 11, **caractérisées en ce qu'**en tant que composés d'organosilicium à fonction amino (F), des organopolysiloxanes de la formule générale :

$$Q_uR^4_{(3-u)}SiO(SiR_2O)_v(SiR^4QO)_wSiR^4_{(3-u)}Q_u \qquad (X)$$

sont utilisés, dans laquelle

Q signifie un radical de la formule :

$$(Si)\text{-}L^1\text{-}[X^5\text{-}L^2\text{-}]_zX^6 \qquad (VIII)$$

R signifie un radical hydrocarboné monovalent, éventuellement substitué, contenant 1 à 18 atomes C par radical,
$R^1$ signifie un atome d'hydrogène ou un radical alkyle contenant 1 à 8 atomes C,
$R^2$ signifie un radical hydrocarboné monovalent contenant 1 à 18 atomes C,
les $R^4$ sont identiques ou différents et signifient un radical R ou $OR^1$,
$L^1$ est identique ou différent et signifie un radical hydrocarboné bivalent relié à Si-C, contenant 1 à 18 atomes C,
les $L^2$ sont identiques ou différents et signifient un radical hydrocarboné bivalent contenant 1 à 6 atomes C,
$X^5$ signifie un radical de la formule -NH- ou $-NR^2-$, de préférence -NH-,
$X^6$ signifie un radical de la formule $-NH_2$ ou $-NR^2H$, de préférence $-NH_2$, et
(Si-) signifie la liaison à l'atome Si,
u signifie 0 ou 1,
v signifie 0 ou un nombre entier de 1 à 2 000, et
w signifie 0 ou un nombre entier de 1 à 20,
z signifie 0, 1, 2 ou 3, de préférence 0 ou 1, de manière particulièrement préférée 1,
à condition qu'en moyenne au moins un radical Q par molécule soit contenu, ce qui signifie que w est différent de 0 lorsque u signifie 0, et que u signifie 1 lorsque w signifie 0.

**13.** Compositions selon la revendication 11 ou 12, **caractérisées en ce qu'**en tant que composés organométalliques (G), des amines, des alcoolates, des sels d'acides carboxyliques, des sels d'acides phosphoriques ou des chélates de métaux choisis dans le groupe constitué par Pb, Zn, Zr, Sb, Fe, Cd, Sn, Ti, Ba, Ca, Mn, V, Al et Co, de préférence des alcoolates ou des sels d'acides carboxyliques de titane ou de zirconium, de préférence du titanate de butyle, de l'octoate de zirconium ou de l'acétate de zirconium, sont utilisés.

**14.** Procédé de traitement de substrats fibreux, de préférence de textiles, avec des compositions selon la revendication 11, 12 ou 13.

**15.** Procédé selon la revendication 14, **caractérisé en ce que** les compositions selon la revendication 11, 12 ou 13 sont appliquées sur les substrats fibreux, de préférence les textiles, puis les substrats fibreux traités, de préférence les textiles traités, sont laissés sécher.

**16.** Procédé d'imprégnation ou d'hydrophobation de substrats fibreux, de préférence de textiles, avec des compositions selon la revendication 11, 12 ou 13, les compositions selon la revendication 11, 12 ou 13 étant appliquées sur les substrats fibreux, de préférence les textiles, puis les substrats fibreux traités, de préférence les textiles traités, étant laissés sécher.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20080293907 A1
- US 20110024679 A1
- US 20160121239 A1
- US 20090144912 A1
- US 20050215806 A1
- US 20020049296 A1
- US 20150112092 A1


### In der Beschreibung aufgeführte Nicht-Patentliteratur


- Der HLB-Wert kann für nichtionische Tenside nach Hans-Dieter Dörfler. Grenzflächen- und Kolloidchemie. VCH, 1994, 198
- Ullmann's Encyclopedia of Industrial Chemistry. Wiley-VCH Verlag, 2003
- **IKA.** *Dispergierer Broschüre,* Mai 2013
- *Römpp Chemie Lexikon online,* 2014
- Angabe des Messbereichs, der entsprechenden Kapillar-Nr. Konstante nach VWR-Laborkatalog, 2011, 645.8
- **G. ENGELHARDT ; H. JANCKE.** Über die H-, C- und Si-NMR chemischen Verschiebungen einiger linearer, verzweigter und cyclischer Methyl-Siloxan-Verbindungen. *J. Organometal. Chem.,* 1971, vol. 28, 293-300
- Chapter 8 - NMR spectroscopy of organosilicon compounds. **ELIZABETH A. WILLIAMS.** The Chemistry of Organic Silicon Compounds. John Wiley and Sons Ltd, 1989, 511-533